(19) 

Europäisches
Patentamt

European
Patent Office

Office européen
des brevets

(11) **EP 4 651 300 A1**

(12) **EUROPEAN PATENT APPLICATION**
published in accordance with Art. 153(4) EPC

(43) Date of publication:
**19.11.2025 Bulletin 2025/47**

(21) Application number: **24777461.5**

(22) Date of filing: **18.01.2024**

(51) International Patent Classification (IPC):
*H01Q 1/24* (2006.01)     *H04M 1/02* (2006.01)

(52) Cooperative Patent Classification (CPC):
**H01Q 1/00; H01Q 1/22; H01Q 1/24; H01Q 1/27;**
**H01Q 1/36; H01Q 1/48; H04M 1/02**

(86) International application number:
**PCT/CN2024/073102**

(87) International publication number:
**WO 2024/198666 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 CN 202310382625**

(71) Applicant: **Huawei Technologies Co., Ltd.**
**Shenzhen, Guangdong 518129 (CN)**

(72) Inventors:
• **WANG, Jikang**
**Shenzhen, Guangdong 518129 (CN)**
• **YU, Dong**
**Shenzhen, Guangdong 518129 (CN)**
• **LEI, Libin**
**Shenzhen, Guangdong 518129 (CN)**

(74) Representative: **Maiwald GmbH**
**Engineering**
**Elisenhof**
**Elisenstrasse 3**
**80335 München (DE)**

(54) **ELECTRONIC DEVICE**

(57)     Embodiments of this application provide an electronic device, to alleviate a problem of relatively low antenna radiation performance. The electronic device includes a first housing, a second housing, a third housing, and a first radiator. The third housing is rotatably connected to the first housing and the second housing. The first radiator is disposed in the third housing. In addition, the electronic device detects, in response to a first operation of a user, that an included angle between the first housing and the third housing is a first target angle, and an included angle between the second housing and the third housing is a second target angle. Radiation of a current distributed on the first housing and the third housing may be superimposed with radiation of a current distributed on the third housing and the second housing.

FIG. 12A

**Description**

This application claims priority to Chinese Patent Application No. 202310382625.8, filed with the China National Intellectual Property Administration on March 31, 2023 and entitled "ELECTRONIC DEVICE", which is incorporated herein by reference in its entirety.

**TECHNICAL FIELD**

This application relates to the field of antenna technologies, and in particular, to an electronic device.

**BACKGROUND**

With continuous development of display technologies, users have increasingly high requirements on viewing experience and portability of electronic devices. A foldable electronic device provides a relatively large display screen in an unfolded state to improve viewing effect, and is convenient for a user to carry in a folded state. Therefore, the foldable electronic device gradually becomes a development trend of a future mobile electronic device. In a process of using the foldable electronic device, the user may implement network communication functions such as a call and internet access by using an antenna in the electronic device.

However, a structure of the foldable electronic device is more complex, and space for disposing the antenna is more limited. This affects radiation performance of the antenna and reduces signal strength of the antenna to some extent.

**SUMMARY**

This application provides an electronic device, to alleviate a problem of relatively low antenna radiation performance when space for disposing an antenna in a foldable electronic device is limited.

To achieve the foregoing objective, this application uses the following technical solutions.

According to one aspect of this application, an electronic device is provided. The electronic device includes a first housing, a second housing, a third housing, and a first radiator. The third housing is located between the first housing and the second housing, and the third housing is rotatably connected to the first housing and the second housing. The first radiator is disposed in the third housing. In addition, the electronic device is configured to detect, in response to a first operation (for example, folding the electronic device) of a user, that an included angle between the first housing and the third housing is a first target angle $\alpha$, and an included angle between the second housing and the third housing is a second target angle $\beta$. The first housing and the second housing are respectively located on two opposite sides of the third housing. The first housing, the second housing, and the third housing are electrically connected.

In conclusion, in the electronic device, the third housing rotates with the first housing and the second housing. Therefore, the user performs a first operation, that is, bends the electronic device, to bend the included angle between the first housing and the third housing to the first target angle $\alpha$, and bend the included angle between the second housing and the third housing to the second target angle $\beta$. When the electronic device is configured to detect, in response to the first operation of the user, that the included angle between the first housing and the third housing is the first target angle $\alpha$, and the included angle between the second housing and the third housing is the second target angle $\beta$, because the first housing, the second housing, and the third housing are electrically connected, the current distributed on the first radiator may be coupled to the third housing, and the current is distributed on each of the first housing, the second housing, and the third housing. In this way, energy of radiation of the current distributed on the first housing and the third housing may be superimposed with energy of radiation of the current distributed on the third housing and the second housing, to improve an antenna gain of the electronic device, so that the electronic device can operate in a high-gain antenna mode, thereby improving signal strength of the electronic device. Because the radiation of the current distributed on the first housing and the third housing and the radiation of the current distributed on the second housing and the third housing are generated when the first housing, the second housing, and the third housing are bent to target angles, when the user needs to use a high-gain antenna, the user only needs to bend the electronic device. Therefore, another antenna, for example, a circularly polarized antenna, does not need to be additionally disposed in the electronic device, so that a problem of relatively low antenna radiation performance can be alleviated when antenna disposing space of the foldable electronic device is limited.

In an optional implementation, the electronic device is further configured, so that when the first target angle $\alpha$ is formed between the first housing and the third housing, and the second target angle $\beta$ is formed between the second housing and the third housing, both an axial ratio of radiation of a current distributed on the first housing and the third housing and an axial ratio of radiation of a current distributed on the second housing and the third housing are less than or equal to 3 dB. In this case, the radiation of the current distributed on the first housing and the third housing and the radiation of the current distributed on the third housing and the second housing may be circularly polarized radiation. In this way, radiation at an included angle position between the first housing and the third housing may be equivalent to that of a circularly polarized antenna (referred to as a first circularly polarized antenna in embodiments of this application). Similarly, radiation at an included angle position between the third housing and the second housing may be equivalent to that of another circularly polarized antenna (referred to as a second circularly polarized antenna in embodiments of this application).

In an optional implementation, the electronic device is further configured, so that when the first target angle $\alpha$ is formed between the first housing and the third housing, and the second target angle $\beta$ is formed between the second housing and the third housing, the radiation of the current distributed on the first housing and the third housing has a first circular polarization characteristic, and the radiation of the current distributed on the second housing and the third housing has a second circular polarization characteristic. The first circular polarization characteristic is the same as the second circular polarization characteristic. The first circular polarization characteristic may be a circular polarization direction of the first circularly polarized antenna, and the second circular polarization characteristic may be a circular polarization direction of the second circularly polarized antenna. Therefore, that the first circular polarization characteristic and the second circular polarization characteristic are the same may mean that a circular polarization direction of the radiation at the included angle position between the first housing and the third housing (that is, radiation of the first circularly polarized antenna) may be the same as a circular polarization direction of the radiation at the included angle position between the third housing and the second housing (that is, radiation of the second circularly polarized antenna). In this way, energy of the radiation at the included angle position between the first housing and the third housing may be superimposed at a far field with energy of the radiation at the included angle position between the third housing and the second housing, so that the foldable electronic device obtains a high-gain antenna, thereby improving signal strength of the antenna of the electronic device.

In an optional implementation, an antenna gain of the electronic device when the first target angle $\alpha$ is formed between the first housing and the third housing and the second target angle $\beta$ is formed between the second housing and the third housing is greater than an antenna gain of the electronic device when the first housing, the second housing, and the third housing are unfolded. In this way, when the user needs to use a high-gain antenna, the user only needs to bend the electronic device. Therefore, another antenna, for example, a circularly polarized antenna, does not need to be additionally disposed in the electronic device, so that a problem of relatively low antenna radiation performance can be alleviated when antenna disposing space of the foldable electronic device is limited.

In an optional implementation, the third housing has a first side surface and a second side surface that are disposed opposite to each other, the first side surface is close to the first housing, and the second side surface is close to the second housing. The first radiator may include a ground end and an open end, the ground end of the first radiator is close to the first side surface and has a distance H1 from the first side surface, and the open end of the first radiator is close to the second side surface and has a distance H2 from the second side surface. $H1 \leq \lambda_1/4$; and $\lambda_1/4 \leq H2 \leq \lambda_1/2$. $\lambda_1$ is a wavelength corresponding to an operating band of the first radiator, and the first radiator is a quarter-wave antenna. In this case, a current on the first radiator may be coupled to the third housing. Because the first housing, the second housing, and the third housing are electrically connected, the current is also distributed on the first housing and the second housing. Because the first radiator is a quarter-wave antenna, and the distance $H1 \leq \lambda_1/4$, in the third support plate (used as the third ground plate) of the third housing, a current distributed on a part covered by the first radiator and a part close to the second housing is within a range of $\lambda_1/4$, and a direction of the current does not change. Therefore, the current in the part that is on the third support plate (used as the third ground plate) of the third housing and that is covered by the first radiator continuously flows into the first housing. In addition, H2 meets a range of $\lambda_1/4 \leq H2 \leq \lambda_1/2$. Therefore, a current distributed on the left of the part that is in the third support plate (used as the third ground plate) of the third housing and that is covered by the first radiator is within a range of $\lambda_1/2$, and a direction does not change after the current is diverted at a position corresponding to the open end a2. In this way, a part of the current on the third housing flows into the second housing from the position corresponding to the open end. In this way, the first current distributed on the first housing and the third housing flows from the third housing to the first housing, and has a "left-handed screw" (or "right-handed screw") characteristic. The second current distributed on the second housing and the third housing flows from the third housing to the second housing, and also has a "left-handed screw" (or "right-handed screw") characteristic. Therefore, when the electronic device is bent to a target angle, radiation of the current distributed on the first housing and the third housing has a circular polarization characteristic, and radiation of the current distributed on the third housing and the second housing has a circular polarization characteristic. When energy of the two radiations having the circular polarization characteristics is superimposed in a far field, an antenna gain of the electronic device can be improved.

In an optional implementation, an operating band of the first radiator is 2 GHz to 2.2 GHz, to implement the foregoing satellite communication. In addition, a range of H1 is $0\,mm \leq H1 \leq 10\,mm$, a range of H2 is $30\,mm \leq H2$, and a range of a length L1 of the first radiator is $8\,mm \leq L1 \leq 30\,mm$. In this way, the distance H1 can meet $H1 \leq \lambda_1/4$, and the distance H2 can meet $\lambda_1/4 \leq H2 \leq \lambda_1/2$, so that a position corresponding to the open end in the third support plate (used as the third ground plate) of the third housing is a current reverse point. In this way, a current on the third support plate (used as the third ground plate) of the third housing is reversed at the current reverse point, a part of the current flows into the first housing and therefore circularly polarized radiation is formed between the first housing and the third housing, and another part of the current flows into the second housing and therefore circularly polarized radiation is formed between the second housing and the third housing.

In an optional implementation, there is a distance H0 between the first side surface and the second side surface, where $\lambda_1/2 \leq H0 \leq 3\lambda_1/4$. In this case, when $H0 < \lambda_1/2$, a width of the third housing is too short, and consequently, a current at a junction position between the third housing and the second housing is far away from a current peak, and the current is relatively small, thereby reducing energy of circularly polarized radiation formed between the second housing and the third housing. Alternatively, when $H0 > 3\lambda_1/4$, a width of the third housing is too long, and consequently, two current reverse points appear on the third support plate (used as the third ground plate) of the third housing. Therefore, it is difficult to form circularly polarized radiation between the second housing and the third housing (or between the first housing and the third housing).

In an optional implementation, the range of H1 is: 0 mm≤H1≤10 mm, and the range of H2 is: 30 mm≤H2. In addition, a range of H0 is: 55 mm≤H0≤80 mm. In this way, the distance H0 may meet $\lambda_1/2 \leq H0 \leq 3\lambda_1/4$.

In an optional implementation, in the first direction, the first housing has a width H7, and the second housing has a width H8. H0/2≤H7≤H0; and H0/2≤H8≤H0. When the first housing, the second housing, and the third housing are unfolded, the first direction is parallel to a direction from the first side surface to the second side surface. In this way, most currents on the first housing can keep flowing downward, and current reverse occurs only at an end that is of the first housing and that is away from the third housing. Similarly, most currents on the second housing can keep flowing upward, and current reverse occurs only at an end that is of the second housing and that is away from the third housing. Therefore, a proportion of reverse currents on the second housing and the first housing is reduced, to reduce impact of the reverse currents on antenna performance.

In an optional implementation, the third housing includes the third support plate and a third frame. The ground end of the first radiator is electrically connected to the third support plate. The third frame is disposed around a periphery of the third support plate, and a part of the third frame is used as the first radiator. In this way, in a process of preparing the third housing, the first radiator can be prepared, and there is no need to separately dispose a metal structure used to form the first radiator.

In an optional implementation, the first radiator includes a first stub and a second stub. The first stub is disposed close to the first housing, and one end of the first stub is used as the ground end of the first radiator and is connected to the third support plate. The second stub and the first stub are disposed in a crossed manner, and one end of the second stub is connected to the other end of the first stub. The other end of the second stub is used as the open end of the first radiator, and extends toward the second housing. There is a first opening between the second stub and the third support plate. The first stub is configured to implement grounding of the first radiator, and the second stub is configured to serve as a main energy radiation part of the first radiator.

In an optional implementation, a length of the first stub is less than a length of the second stub, so that the first stub is mainly configured to implement grounding of the first radiator, and the second stub is mainly configured to implement signal radiation of the first radiator.

In an optional implementation, in a length direction of the first stub, a dimension of the first opening is less than or equal to 4 mm, so that the current on the first radiator is coupled to the third ground plate.

In an optional implementation, the electronic device further includes a second radiator, and the second radiator is disposed in the third housing, and is located on a same side of the third housing as the first radiator. The first radiator and the second radiator are disposed in a symmetric structure with respect to a center of the third ground plate (302). In this way, similar to the technical effects of the first radiator, it can be learned that when the electronic device is bent to a target angle, a current from the first radiator and a current from the second radiator are distributed on the first housing and the third housing. The current from the first radiator and the current from the second radiator are distributed on the second housing and the third housing. The foregoing currents all have a "left-handed screw" (or "right-handed screw") characteristic, and energy of radiation of the four currents is superimposed in a far field, so as to improve an antenna gain of the electronic device.

In an optional implementation, the second radiator includes a third end and a fourth end. A distance between the third end of the second radiator and the second ground plate is less than a distance between the fourth end of the second radiator and the first ground plate. The third end of the second radiator is electrically connected to the third ground plate, and a feed end of the second radiator is close to the fourth end of the second radiator, so that the second radiator can be disposed close to the second housing.

In an optional implementation, the first radiator and the second radiator are disposed in a symmetric structure with respect to a center of the third housing. In this way, the current from the first radiator distributed on the first housing and the third housing may be approximately equal to the current from the second radiator distributed on the second housing and the third housing, so that radiation of the foregoing four currents is superimposed to a higher degree.

In an optional implementation, the electronic device is further configured to: before responding to the first operation of the user, display indication information in response to a second operation of the user, where the indication information indicates the user to bend the first housing and the third housing to form the first target angle $\alpha$, and bend the

second housing and the third housing to form the second target angle β, and the first housing and the second housing are respectively located on two opposite sides of the third housing. In this way, when the user is unfamiliar with a use method for satellite communication, the user may bend the electronic device to a target angle based on the indication information displayed by the electronic device and under guidance of the indication information. This facilitates an operation of the user.

In an optional implementation, the current distributed on the third housing and the first housing is a first current, and the current distributed on the third housing and the second housing is a second current. The first current is orthogonal to the second current. In this way, current distribution on the third housing can have a more distinct current reverse phenomenon at a position corresponding to a part such as the feed end of the radiator.

In an optional implementation, when the first housing and the second housing are respectively located on two opposite sides of the third housing, a first target angle is formed between the first housing and the third housing, and a second target angle is formed between the third housing and the second housing. A range of the first target angle and a range of the second target angle are between 60° and 120°. In this way, when the first target angle is less than 60°, the included angle between the first housing and the second housing is relatively small, and transition is not smooth enough. Consequently, the first current distributed on the first housing and the second housing has a relatively large flow direction change at the included angle position between the first housing and the second housing. This is not conducive to forming a "left-handed screw" (or "right-handed screw") characteristic. Therefore, the first current is difficult to be orthogonal to the second current. Alternatively, when the first target angle is greater than 120°, the included angle between the first housing and the second housing is relatively large, and is close to a straight angle. Consequently, the first current distributed on the first housing and the second housing has a relatively small flow direction change at the included angle position between the first housing and the second housing. This is not conducive to forming a "left-handed screw" (or "right-handed screw") characteristic. Therefore, the first current is difficult to be orthogonal to the second current.

In an optional implementation, the third housing has a first side surface and a second side surface that are disposed opposite to each other, the first side surface is close to the first housing, and the second side surface is close to the second housing. One end of the first radiator is close to the first side surface and has a distance H5 from the first side surface, and the other end of the first radiator is close to the second side surface and has a distance H6 from the second side surface. $H5 \leq \lambda_1/4$, $H6 \leq \lambda_1/4$, $\lambda_1$ is a wavelength corresponding to an operating band of the first radiator, and the first radiator is a half-wave antenna. Based on this, because the first radiator is a half-wave antenna, a current distributed in a part that is in the third housing and that is covered by the first radiator is within a range of $\lambda_1/2$. In addition, a current at a position that corresponds to one end of the first radiator and that is in the third housing is reversed, and $H5 \leq \lambda_1/4$. Therefore, the current continuously flows into the first housing. In addition, a current at a position that corresponds to the other end of the first radiator and that is in the third housing is reversed, and $H6 \leq \lambda_1/4$. Therefore, the current flows toward the first housing, continuously flows into the first housing, and is superimposed in a far field with the current flowing into the first housing. In addition, the current on the second housing flows away from the third housing at a position of an inflection point. In this way, the first current distributed on the first housing and the third housing flows from the third housing to the first housing, and has a "left-handed screw" (or "right-handed screw") characteristic. The second current distributed on the second housing and the third housing flows from the third housing to the second housing, and also has a "left-handed screw" (or "right-handed screw") characteristic. Therefore, when the electronic device is bent to a target angle, radiation of the current distributed on the first housing and the third housing has a circular polarization characteristic, and radiation of the current distributed on the third housing and the second housing has a circular polarization characteristic. When energy of the two radiations having the circular polarization characteristics is superimposed in a far field, an antenna gain of the electronic device can be improved.

In an optional implementation, an operating band of the first radiator is 2 GHz to 2.2 GHz, to implement the foregoing satellite communication. A range of H5 is 0 mm≤H5≤24 mm, a range of H6 is 0 mm≤H6≤24 mm, and a range of a length L1 of the first radiator is 25 mm≤L1≤40 mm. In this case, the first radiator may be a half-wave antenna, and when a dielectric constant of a filling medium (for example, plastic or glass fiber) in the third housing 23 is 2 to 9, the distance H5 may meet $H5 \leq \lambda_1/4$, and the distance H6 may meet $H6 \leq \lambda_1/4$. In this way, the current distributed in the part that is of the third support plate (used as the third ground plate) of the third housing and that is covered by the first radiator is within a range of $\lambda_1/2$, and positions that are in the third support plate (used as the third ground plate) of the third housing and that correspond to two ends of the first radiator are current reverse points. In this case, a current at a position that is in the third support plate (used as the third ground plate) of the third housing and that corresponds to one end of the first radiator is reversed, and flows into the first housing. A current at a position that is in the third support plate (used as the third ground plate) of the third housing and that corresponds to another end of the first radiator is reversed, flows into the first housing, and is superimposed in a far field with the foregoing current that flows into the first housing, so as to form circularly polarized radiation between the first housing and the third housing. In addition, a current in a part that is in the third housing and that is covered by the first radiator flows toward the second housing, and at an inflection point, the current on the second housing includes a current that flows away from the third housing. Therefore, circularly polarized radiation is formed between the second housing and the third housing.

In an optional implementation, there is a distance H0 between the first side surface and the second side surface, where $\lambda_1/2 \leq H0 \leq 3\lambda_1/4$. In this case, when $H0 < \lambda_1/2$, a width of the third housing is too short, and consequently, current reverse cannot be formed at the positions that are in the third support plate (used as the third ground plate) of the third housing and that correspond to the two ends of the first radiator. Therefore, it is difficult to form circularly polarized radiation between the second housing and the third housing (or between the first housing and the third housing). Alternatively, when $H0 > 3\lambda_1/4$, a width of the third housing is too long, and consequently, there is only one current reverse point on the third support plate (used as the third ground plate) of the third housing, and the foregoing two current reverse points cannot appear at the same time. Therefore, it is difficult to form circularly polarized radiation between the second housing and the third housing (or between the first housing and the third housing).

In an optional implementation, H5=H6. In this way, the first radiator can be disposed in the middle of the third housing, so that a current reverse point is generated at each of the positions that are in the third support plate (used as the third ground plate) of the third housing and that correspond to the two ends of the first radiator. In addition, energy of radiation between the second housing and the third housing may be close to energy of radiation between the first housing and the third housing.

In an optional implementation, the third housing includes the third support plate and a third frame. The third frame is disposed around a periphery of the third support plate, and a part of the third frame is used as the first radiator. Therefore, the first radiator can be prepared while the third housing is manufactured. In addition, the first radiator is strip-shaped, and there is a third opening between the first radiator and the third support plate. A dimension of the third opening is less than or equal to 4 mm in a direction perpendicular to a length direction of the first radiator, so that the current on the first radiator is coupled to the third support plate.

In an optional implementation, in the first direction, the first housing has a width H7, and the second housing has a width H8. $H0/2 \times \leq H7 \leq H0$; and $H0/2 \leq H8 \leq H0$. When the first housing, the second housing, and the third housing are unfolded, the first direction is parallel to a direction from the first side surface to the second side surface. In this way, the first ground plate (the first support plate of the first housing) may have a current flowing away from the third housing. Similarly, the second ground plate (the second support plate of the second housing) may have a current flowing away from the third housing, thereby helping form the circularly polarized radiation.

In an optional implementation, at least one flexible display includes a first flexible display. A rear surface of the first flexible display is connected to the first housing, the second housing, and the third housing. When the first flexible display is unfolded, a display surface of the first flexible display is parallel to a plate surface of the third ground plate. An electronic device having the first flexible display may have a display function.

In an optional implementation, the at least one flexible display further includes a second flexible display, a rear surface of the second flexible display is connected to the first housing, the second housing, and the third housing, and the first housing, the second housing, and the third housing are located between the first flexible display and the second flexible display. When the second flexible display is unfolded, a display surface of the second flexible display is parallel to the plate surface of the third ground plate. In this case, there may be two folding manners of the electronic device. For example, a display surface of a first display part of the first flexible display and a display surface of a third display part are disposed facing each other, and the display surface of the third display part and a display surface of a second display part are away from each other. The foregoing folding manner may be referred to as standard "S" folding. Alternatively, a display surface of a first display part of the first flexible display and a display surface of a third display part are away from each other, and the display surface of the third display part and a display surface of a second display part are disposed facing each other. The foregoing folding manner may be referred to as reverse "S" folding.

**BRIEF DESCRIPTION OF DRAWINGS**

FIG. 1 is a diagram of a structure of an electronic device according to an embodiment of this application;
FIG. 2A is a diagram of a folded state of the electronic device in FIG. 1;
FIG. 2B is a diagram of another folded state of the electronic device in FIG. 1;
FIG. 3 is a diagram of a structure of another electronic device according to an embodiment of this application;
FIG. 4 is a diagram of a structure of another electronic device according to an embodiment of this application;
FIG. 5A is a diagram of a structure of another electronic device according to an embodiment of this application;
FIG. 5B is a diagram of a structure of another electronic device according to an embodiment of this application;
FIG. 6 is a diagram of sending and receiving paths of an electronic device according to an embodiment of this application;
FIG. 7 is a diagram of a structure of an antenna apparatus according to an embodiment of this application;
FIG. 8 is a diagram of a manner of disposing an electronic device in an electronic device according to an embodiment of this application;

FIG. 9A is a diagram of an operating scenario of an electronic device according to an embodiment of this application;

FIG. 9B is a diagram of another operating scenario of an electronic device according to an embodiment of this application;

FIG. 10A is a diagram of a display interface of an electronic device according to an embodiment of this application;

FIG. 10B is a diagram of another display interface of an electronic device according to an embodiment of this application;

FIG. 10C is a diagram of another display interface of an electronic device according to an embodiment of this application;

FIG. 10D is a diagram of another display interface of an electronic device according to an embodiment of this application;

FIG. 10E is a diagram of another display interface of an electronic device according to an embodiment of this application;

FIG. 11A is a diagram of a structure of an antenna apparatus according to an embodiment of this application;

FIG. 11B is a diagram of another structure of an electronic device according to an embodiment of this application;

FIG. 12A is a diagram of current distribution of the antenna apparatus shown in FIG. 11A;

FIG. 12B is a diagram of a principle of current distribution of the electronic device shown in FIG. 12A;

FIG. 12C is a top view in the direction A in FIG. 12A;

FIG. 13A is an antenna pattern of the electronic device shown in FIG. 12A;

FIG. 13B is a diagram of antenna efficiency of the electronic device shown in FIG. 12A;

FIG. 14A is another antenna pattern of the electronic device shown in FIG. 12A;

FIG. 14B is another diagram of antenna efficiency of the electronic device shown in FIG. 12A;

FIG. 15 is a diagram of current distribution of a ground plate in an electronic device according to an embodiment of this application;

FIG. 16A is an antenna pattern of another electronic device according to an embodiment of this application;

FIG. 16B is a diagram of antenna efficiency of another electronic device according to an embodiment of this application;

FIG. 17A is a diagram of another structure of an antenna apparatus according to an embodiment of this application;

FIG. 17B is a diagram of another structure of an electronic device according to an embodiment of this application;

FIG. 18 is a diagram of current distribution of a ground plate in the electronic device shown in FIG. 17A;

FIG. 19A is a diagram of another structure of an antenna apparatus according to an embodiment of this application;

FIG. 19B is a diagram of another structure of an electronic device according to an embodiment of this application;

FIG. 20A is a diagram of current distribution of the antenna apparatus shown in FIG. 19A;

FIG. 20B is a diagram of a principle of current distribution of the antenna apparatus shown in FIG. 20A;

FIG. 21A is an antenna pattern of the electronic device shown in FIG. 20A; and

FIG. 21B is a diagram of antenna efficiency of the electronic device shown in FIG. 20A.

Reference numerals:

01: electronic device; 10: first flexible display; 11: second flexible display; 21: first housing; 22: second housing; 23: third housing; 101: first display part; 102: second display part; 103: third display part; 11: second flexible display; 30: antenna apparatus; 100: radio frequency circuit; 110: receiving path; 120: sending path; 301: first ground plate; 302: second ground plate; 303: third ground plate; 211: first support plate; 212: first frame; 221: second support plate; 222: second frame; 231: third support plate; 232: third frame; 40: satellite communication option; 41: first information prompt box; 42: indication information; 43: second information prompt box; 311: first radiator; 3111: first stub; 3112: second stub; 3113: first opening; 3114: feed end of the first radiator; 321: second radiator; 3211: third stub; 3212: fourth stub; 3213: second opening; 3214: feed end of the second radiator; 3311: third opening.

## DESCRIPTION OF EMBODIMENTS

The following describes the technical solutions in embodiments of this application with reference to the accompanying drawings in embodiments of this application. It is clear that the described embodiments are merely some rather than all of embodiments of this application.

The following terms "first", "second", and the like are merely used for ease of description, but should not be understood as indicating or implying relative importance or implying a quantity of indicated technical features. Therefore, a feature limited by "first", "second", or the like may explicitly or implicitly include one or more features. In the descriptions of this application, unless otherwise stated, "a plurality of" means two or more.

In addition, in embodiments of this application, orientation terms such as "upper", "lower", "left", "right", "horizontal", and "vertical" may include but are not limited to definitions based on illustrated orientations in which components in the accompanying drawings are placed. It should be understood that, these directional terms may be relative concepts used for relative description and clarification, and may change accordingly depending on a change in the orientations in which the components are placed in the accompanying drawings.

In this application, unless otherwise expressly specified and limited, the term "connection" should be understood in a broad sense. For example, "connection" may be a fixed mechanical connection, or may be a detachable mechanical connection or an integration. Alternatively, "connection" may be a direct connection, or may be an indirect connection via an intermediate medium.

In addition, unless otherwise expressly specified and limited, the term "electrical connection" should be understood in a broad sense. For example, "electrical connection" may be a direct electrical connection, for example, two components are physically in contact and electrically connected; or may be understood as that in a line structure, different components are electrically connected through a physical line that can transmit an electrical signal, such as a printed circuit board (printed circuit board, PCB) copper foil or a conducting wire, to transmit an electrical signal. Alternatively, "electrical connection" may be an indirect electrical connection between two components via an intermediate medium. Alternatively, "electrical connection" may be an electrical connection between two components in a separated or non-contact manner. For example, two components are electrically connected in a capacitive coupling manner, to transmit an electrical signal.

In this application, that two components are "parallel" to each other may be that the two components are completely parallel, or may be that the two components are approximately parallel within an acceptable deviation range. In addition, that two components are "perpendicular" to each other may be that the two components are completely perpendicular, or may be that the two components are approximately perpendicular within an acceptable deviation range. The acceptable deviation range may be determined by a limitation of a measurement system used by a person of ordinary skill in the art.

It should be noted that, in the accompanying drawings of embodiments of this application, an assembly is represented by a guide line with an arrow, a component is represented by only a guide line, and an end of a guide line of a hollow structure such as an opening or a hole is represented by a wave line.

Embodiments of this application provide an electronic device. The electronic device may be used in various communication systems or communication protocols, for example, a global system for mobile communications (global system for mobile communications, GSM), a code division multiple access (code division multiple access, CDMA) system, wideband code division multiple access (wideband code division multiple access wireless, WCDMA), a general packet radio service (general packet radio service, GPRS), and long term evolution (long term evolution, LTE). The electronic device may have a display function. The electronic device may include a mobile phone (mobile phone), a tablet computer (pad), a television, an intelligent wearable product (for example, a smartwatch or a smart band), a virtual reality (virtual reality, VR) electronic device, an augmented reality (augmented reality, AR) electronic device, or the like. A specific form of the electronic device is not specially limited in embodiments of this application.

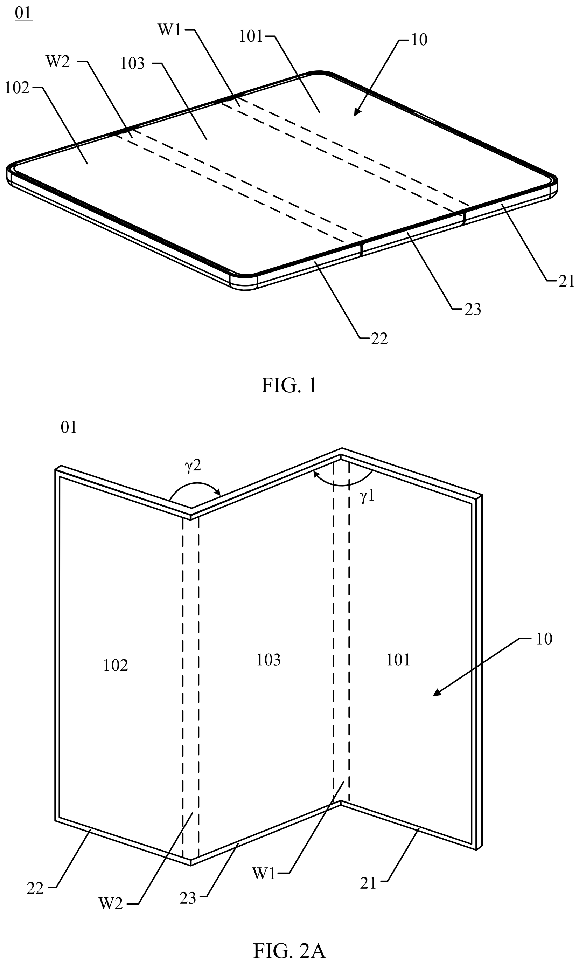

In some embodiments, to enable the electronic device to implement a display function, the electronic device 01 may include at least one flexible display, for example, a first flexible display 10 shown in FIG. 1. In some embodiments of this application, the first flexible display 10 may be a self-luminous display, for example, an organic light-emitting diode (organic light-emitting diode, OLED) display, a micro (micro or mini) light-emitting diode (light-emitting diode, LED) display, or a quantum dot light-emitting diode (quantum dot light-emitting diode, QLED) display. Alternatively, in some other embodiments of this application, the first flexible display 10 may be a liquid crystal display (liquid crystal display, LCD) that needs a backlight source.

The electronic device 01 may further include a circuit board and a processor that are electrically connected to the first flexible display 10. The circuit board may be a PCB, and the processor is disposed on the PCB. The processor may provide display data for the first flexible display 10, to drive the first flexible display 10 to display an image. For example, the processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In addition, the electronic device 01 may further include an external memory interface, an internal memory, a universal serial bus interface, a charging management module, a power management module, a battery, an antenna, a mobile communication module, a wireless communication module, an audio module, a speaker, a receiver, a microphone, a headset jack, a sensor module, a button, a camera, and the like that are electrically connected to the processor. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Based on this, in a process of folding or unfolding the electronic device 01, to support the first flexible display 10, in some embodiments of this application, the electronic device 01 may further include at least three housings, for example, a first housing 21, a second housing 22, and a third housing 23 shown in FIG. 1. The third housing 23 is located between the first housing 21 and the second housing 22.

In addition, the electronic device 01 may further include hinge assemblies (not shown in the figure) located between the first housing 21 and the third housing 23 and between the third housing 23 and the second housing 22. The third housing 23 may be rotatably connected to the first housing 21 through the hinge assembly. In addition, the third housing 23 may be rotatably connected to the second housing 22 through the hinge assembly.

A rear surface of the first flexible display 10 (a surface disposed opposite to a display surface of the first flexible display 10) may be connected to support surfaces of the first housing 21, the second housing 22, and the third housing 23. The first flexible display 10 may include a first display part 101, a second display part 102, a third display part 103, a first bending part W1, and a second bending part W2. The first display part 101 may be connected to the support surface of the first housing 21, the second display part 102 may be connected to the support surface of the second housing 22, and the third display part 103 may be connected to the support surface of the third housing 23.

Based on this, the first bending part W1 located between the first display part 101 and the third display part 103 may be connected to the hinge assembly between the first housing 21 and the third housing 23. The second bending part W2 located between the third display part 103 and the second display part 102 may be connected to the hinge assembly between the third housing 23 and the second housing 22.

In some embodiments of this application, when the first housing 21, the second housing 22, and the third housing 23 are in an unfolded state as shown in FIG. 1, the support surfaces of the first housing 21, the second housing 22, and the third housing 23 are in a flush state. In this case, display surfaces of the first display part 101, the second display part 102, and the third display part 103 are parallel to a support surface of any one of the first housing 21, the second housing 22, and the third housing 23. An included angle between any two of the first display part 101, the second display part 102, and the third display part 103 may be equal to or close to 180°.

In this case, for example, a combination of images displayed by the first display part 101, the second display part 102, and the third display part 103 may be a frame of complete image. Alternatively, the first display part 101, the second display part 102, and the third display part 103 may display different and complete images in a same frame. In this case, the electronic device 01 is in an unfolded state, so that a relatively large display area is provided for a user, thereby helping improve viewing experience of the user.

In some other embodiments of this application, as shown in FIG. 2A, when the first housing 21 and the third housing 23 rotate relative to each other, for example, when the first housing 21 rotates clockwise relative to the third housing 23 in an arrow direction shown in FIG. 2A, the display surface of the first display part 101 and the display surface of the third display part 103 are disposed facing each other, and the first bending part W1 is bent and deformed, so that there is an included angle $\gamma1$ between the first display part 101 and the third display part 103 of the first flexible display 10.

Similarly, when the third housing 23 and the second housing 22 rotate relative to each other, for example, when the second housing 22 rotates clockwise relative to the third housing in an arrow direction shown in FIG. 2A, the display surface of the third display part 103 and the display surface of the second display part 102 are disposed facing away from each other, and the second bending part W2 is bent and deformed, so that there is an included angle $\gamma2$ between the third display part 103 and the second display part 102 of the first flexible display 10. The foregoing folding manner may be referred to as standard "S" folding.

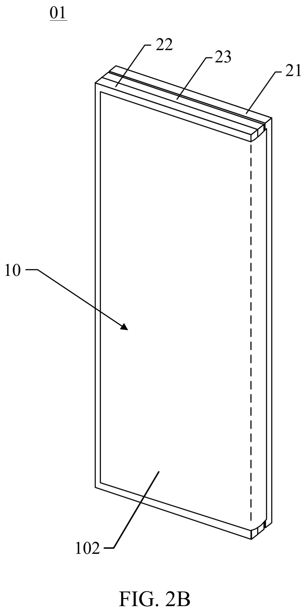

Based on this, when the included angle $\gamma1$ and the included angle $\gamma2$ are approximately 0°, the electronic device 01 is in a fully folded state as shown in FIG. 2B. In this case, the third display part 103 and the first display part 101 (as shown in FIG. 2A) of the first flexible display 10 are attached, and the user cannot view images displayed by the third display part 103 and the first display part 101, or the third display part 103 and the first display part 101 no longer display images. An image displayed by the second display part 102 shown in FIG. 2B can be viewed by the user. In this case, the electronic device in the fully folded state may be convenient for the user to carry or perform an operation such as answering/making a call or replying to a message.

It should be noted that the first bending part W1 and the second bending part W2 in the first flexible display 10 may display an image, or may not have a display function. This is not limited in this application.

The foregoing is described by using an example in which the electronic device 01 includes three housings: the first housing 21, the second housing 22, and the third housing 23 shown in FIG. 1, and the first flexible display 10 includes three display parts: the first display part 101, the second display part 102, and the third display part 103. In this case, when the electronic device 01 is in the fully folded state shown in FIG. 2B, the three housings (that is, the first housing 21, the second housing 22, and the third housing 23) are stacked, so that the three display parts (that is, the first display part 101, the second display part 102, and the third display part 103) of the first flexible display 10 are folded in a stacked manner. In this case, the electronic device 01 may be a three-fold electronic device.

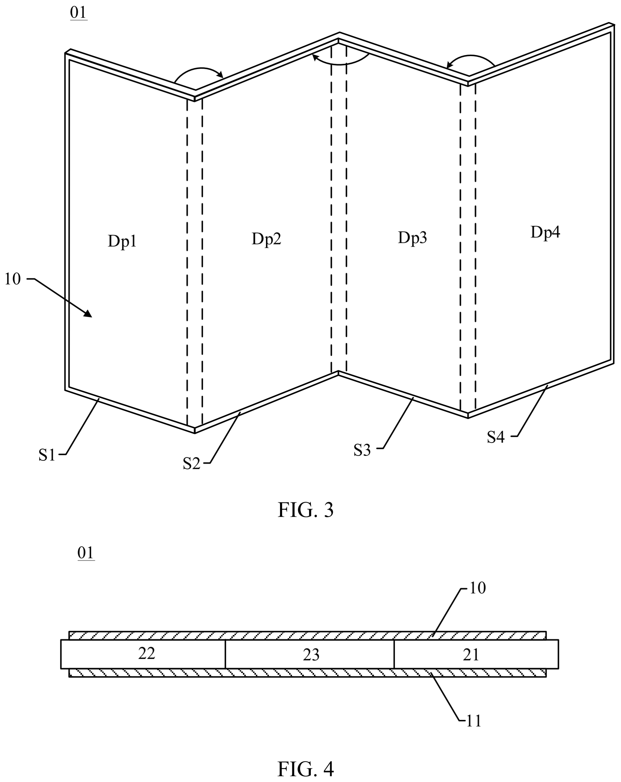

In some other embodiments of this application, as shown in FIG. 3, the electronic device 01 may include four housings: a housing S1, a housing S2, a housing S3, and a housing S4 shown in FIG. 1, and the first flexible display 10 may include four display parts: a display part Dp1, a display part Dp2, a display part Dp3, and a display part Dp4. Each display part is connected to one housing. In this case, when the electronic device 01 is in the fully folded state, the four housings (that is, the housing S1, the housing S2, the housing S3, and the housing S4) are stacked, so that the four display parts (that is, the display part Dp1, the display part Dp2, the display part Dp3, and the display part Dp4) of the first flexible display 10 are folded in a stacked manner. In this case, the electronic device 01 may be a four-fold electronic device.

Based on this, in FIG. 3, three sequentially adjacent housings, for example, the housing S1, the housing S2, and the housing S3, may be the first housing 21, the third housing 23, and the second housing 22 in sequence. The display part Dp1, the display part Dp2, and the display part Dp3 that are respectively connected to the housing S1, the housing S2, and the housing S3 may be the first display part 101, the third display part 103, and the second display part 102 in sequence. Alternatively, for another example, the housing S2, the housing S3, and the housing S4 may be the first housing 21, the third housing 23, and the second housing 22 in sequence. The display part Dp2, the display part Dp3, and the display part Dp4 that are respectively connected to the housing S2, the housing S3, and the housing S4 may be the first display part 101, the third display part 103, and the second display part 102 in sequence.

Alternatively, in some other embodiments, the electronic device 01 may include at least four housings, and the first flexible display 10 may include at least four display parts, so that the electronic device can implement a multi-fold manner. For ease of description, most of the following embodiments are described by using an example in which the electronic device 01 may be the foregoing three-fold electronic device.

In addition, the electronic device 01 is described above by using an example in which the electronic device 01 includes one flexible display, that is, the first flexible display 10 in FIG. 1. In some other embodiments of this application, as shown in FIG. 4, the electronic device 01 may include two flexible displays, for example, the first flexible display 10 and a second flexible display 11. A rear surface of the second flexible display 11 is connected to the first housing 21, the second housing 22, and the third housing 23, and the first housing 21, the second housing 22, and the third housing 23 are located between the first flexible display 10 and the second flexible display 11.

Similarly, the second flexible display 11 may be an OLED display, a micro- or mini-LED display, a QLED display, or the like. Alternatively, in some other embodiments of this application, the second flexible display 11 may be an LCD. The second flexible display 11 is the same as the first flexible display 10, and may have a first display part, a second display part, a third display part, a first bending part, and a second bending part. Disposing manners of the foregoing structures are the same as those described above. Details are not described one by one in this application.

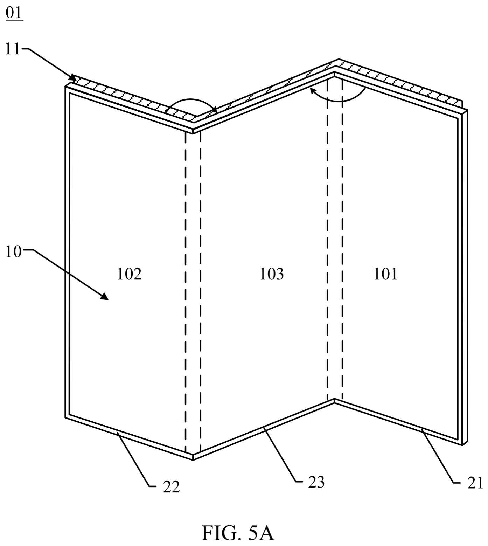

In this case, when the first housing 21 and the third housing 23 rotate relative to each other, and the third housing 23 and the second housing 22 rotate relative to each other, the electronic device 01 may be folded in two manners. For example, as shown in FIG. 5A, the display surface of the first display part 101 of the first flexible display 10 and the display surface of the third display part 103 are disposed facing each other, and the display surface of the third display part 103 and the display surface of the second display part 102 are disposed facing away from each other. The foregoing folding manner may be referred to as standard "S" folding. When the electronic device 01 is in the fully folded state, a part that is of the first flexible display 10 and that is connected to the second housing 22 (that is, the second display part 102 of the first flexible display 10) and a part that is of the second flexible display 11 and that is connected to the first housing 21 (that is, the first display part of the second flexible display 11) are located on an outer side, to display an image.

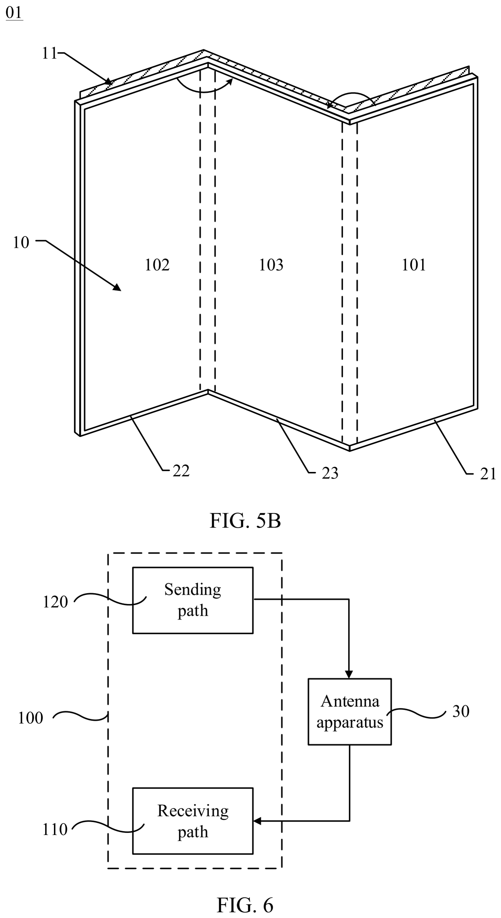

Alternatively, for another example, as shown in FIG. 5B, the display surface of the first display part 101 of the first flexible display 10 and the display surface of the third display part 103 are disposed facing away from each other, and the display surface of the third display part 103 and the display surface of the second display part 102 are disposed facing each other. The foregoing folding manner may be referred to as reverse "S" folding. When the electronic device 01 is in the fully folded state, a part that is of the first flexible display 10 and that is connected to the first housing 21 (that is, the first display part 101 of the first flexible display 10) and a part that is of the second flexible display 11 and that is connected to the second housing 22 (that is, the second display part of the second flexible display 11) are located on an outer side, to display an image.

It should be noted that FIG. 5A and FIG. 5B are described by using an example in which the electronic device 01 includes two flexible displays: the first flexible display 10 and the second flexible display 11. In addition, to facilitate illustration of the second flexible display 11, there is a spacing between the rear surface of the second flexible display 11 in FIG. 5A and FIG. 5B and the first housing 21, the second housing 22, and the third housing 23. In an actual product, the rear surface of the second flexible display 11 is connected to the first housing 21, the second housing 22, and the third housing 23 through an adhesive layer. In addition, for ease of description, most of the following embodiments are described by using an example in which the electronic device 01 includes one flexible display shown in FIG. 1, that is, the first flexible display 10.

To enable a user to perform network communication in a process of using the electronic device 01, the electronic device 01 may further include an antenna apparatus 30 shown in FIG. 6. The antenna apparatus 30 is electrically connected to the foregoing flexible display, for example, the first flexible display 10.

For example, the first flexible display 10 may include a radio frequency circuit 100 shown in FIG. 6, and the radio frequency circuit 100 may be electrically connected to the antenna apparatus 30. In some embodiments of this application, the radio frequency circuit 100 may include a receiving path 110 and a sending path 120 that are electrically connected to the antenna apparatus 30. The receiving path 110 may include components such as a low noise amplifier (low noise amplifier, LNA), a filter (filter), and an analog-to-digital converter (analog-to-digital converter, ADC). The receiving path 110 may process a radio frequency signal received from the antenna apparatus 30, to ensure that a needed radio frequency signal can be completely picked up without distortion and transmitted to a next-stage circuit. In addition, the sending path 120 may include a digital-to-analog converter (digital-to-analog converter, DAC), a filter, an amplifier, and the like. The sending path 120 is configured to perform power amplification and filtering processing on a radio frequency signal, and transmit the radio frequency signal to the antenna apparatus, to send the signal through the antenna apparatus 30.

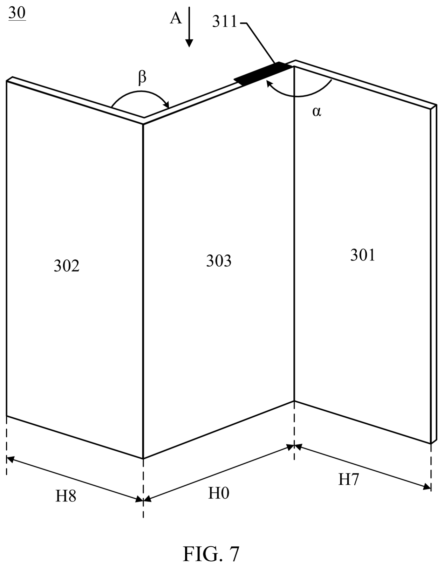

The following describes a structure of the antenna apparatus 30 by using an example. In some embodiments of this application, as shown in FIG. 7, the antenna apparatus 30 may include a first ground plate 301, a second ground plate 302, a third ground plate 303, and a first radiator 311. The third ground plate 303 may be located between the first ground plate 301 and the second ground plate 302, and the third ground plate 303 may be rotatably connected to the first ground plate 301 and the second ground plate 302 directly or indirectly through other intermediate components. In addition, the third ground plate 303 may be electrically connected to the first ground plate 301 and the second ground plate 302.

The first ground plate 301, the second ground plate 302, and the third ground plate 303 that are electrically connected may form a reference ground of the electronic device 01. For example, when the electronic device 01 includes at least one PCB, the PCB may include a dielectric layer, a ground plane, and a routing layer. The ground plane may be used as at least one of the first ground plate 301, the second ground plate 302, and the third ground plate 303. In some embodiments of this application, the electronic device 01 may include at least three PCBs, and each PCB is electrically connected to one display part (for example, the first display part 101, the second display part 102, and the third display part 103 shown in FIG. 2A) in the first flexible display 10. In this case, ground planes in all the PCBs may be respectively used as the first ground plate 301, the second ground plate 302, and the third ground plate 303.

Based on this, the three PCBs may be separately disposed in the electronic device 01, for example, on the first housing 21, the second housing 22, and the third housing 23 shown in FIG. 2A. In this way, when the first housing 21 and the third housing 23 rotate relative to each other, the first ground plate 301 and the third ground plate 303 that are formed by using the ground planes of the different PCBs rotate relative to each other under driving of the first housing 21 and the third housing 23, to implement an indirect rotatable connection between the first ground plate 301 and the third ground plate 303. Similarly, when the second housing 22 and the third housing 23 rotate relative to each other, the second ground plate 302 and the third ground plate 303 that are formed by using the ground planes of the different PCBs rotate relative to each other under driving of the second housing 22 and the third housing 23, to implement an indirect rotatable connection between the second ground plate 302 and the third ground plate 303.

Alternatively, for another example, when the electronic device 01 includes a metal layer disposed on a rear surface of the first flexible display 10, the metal layer may be used as at least one of the first ground plate 301, the second ground plate 302, and the third ground plate 303. In some embodiments of this application, for the first display part 101, the second display part 102, and the third display part 103 shown in FIG. 2A, metal layers on rear surfaces of all the display parts may be respectively used as the first ground plate 301, the second ground plate 302, and the third ground plate 303.

Based on this, when the first housing 21 and the third housing 23 rotate relative to each other, the first ground plate 301 formed by using the metal layer on the rear surface of the first display part 101 and the third ground plate 303 formed by using the metal layer on the rear surface of the third display part 103 rotate relative to each other under driving of the first housing 21 and the third housing 23, to implement an indirect rotatable connection between the first ground plate 301 and the third ground plate 303. Similarly, when the second housing 22 and the third housing 23 rotate relative to each other, the second ground plate 302 formed by using the metal layer on the rear surface of the second display part 102 and the third ground plate 303 formed by using the metal layer on the rear surface of the third display part 103 rotate relative to each other under driving of the second housing 22 and the third housing 23, to implement an indirect rotatable connection between the second ground plate 302 and the third ground plate 303.

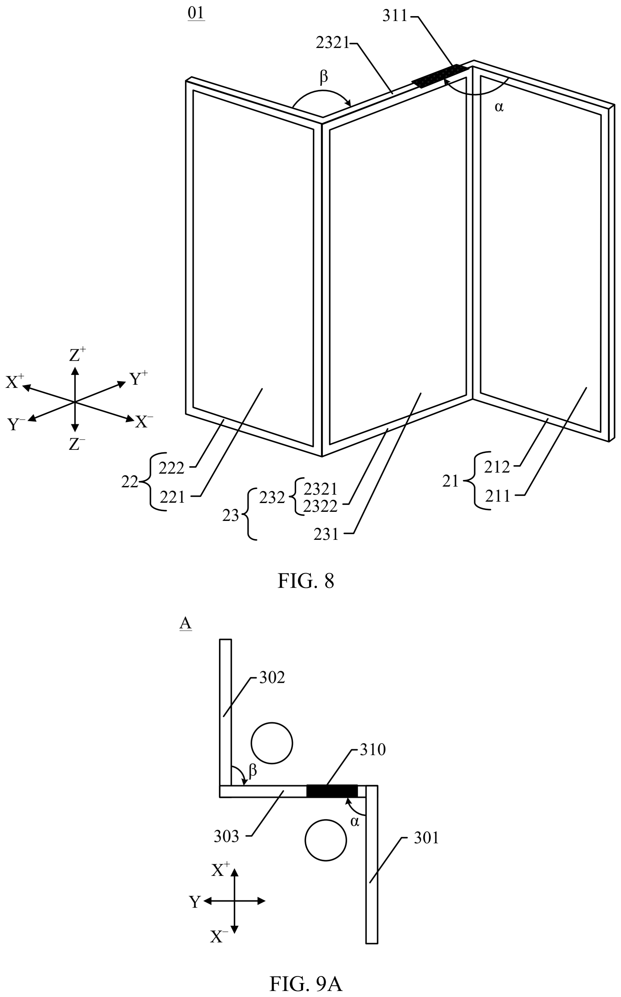

Alternatively, for another example, as shown in FIG. 8, the first housing 21 of the electronic device 01 may include a first support plate 211 and a first frame 212 disposed around a periphery of the first support plate 211. In this case, at least a part of the first support plate 211 may be used as the first ground plate 301 shown in FIG. 7. The part that is of the first support plate 211 and that is at least used as the first ground plate 301 may be made of a metal material. In this way, in a process of preparing the first housing 21, the first ground plate 301 can be prepared, and there is no need to separately dispose a metal structure used to form the first ground plate 301.

Similarly, the second housing 22 may include a second support plate 221 and a second frame 222 disposed around a periphery of the second support plate 221. In this case, at least a part of the second support plate 221 may be used as the second ground plate 302 shown in FIG. 7. In addition, the third housing 23 may include a third support plate 231 and a third frame 232 disposed around a periphery of the third support plate 231. In this case, at least a part of the third support plate 231 may be used as the third ground plate 303 shown in FIG. 7. The first support plate 211, the second support plate 221, and the third support plate 231 are configured to connect to the rear surface of the first flexible display 10 (as shown in FIG. 2A), to support the first flexible display 10. Technical effects of the second support plate 221 and the third support plate 231 are the same as those described above, and details are not described herein again.

Based on this, as shown in FIG. 8, when the first housing 21 and the third housing 23 rotate relative to each other, the first support plate 211 that is in the first housing 21 and that is used as the first ground plate 301 (as shown in FIG. 7) and the third support plate 231 that is in the third housing 23 and that is used as the third ground plate 303 (as shown in FIG. 7) may rotate relative to each other, to implement an indirect rotatable connection between the first ground plate 301 and the third ground plate 303. Similarly, when the second housing 22 and the third housing 23 rotate relative to each other, the second support plate 221 that is in the second housing 22 and that is used as the second ground plate 302 (as shown in FIG. 7) and the third support plate 231 that is in the third housing 23 and that is used as the third ground plate 303 (as shown in FIG. 7) may rotate relative to each other, to implement an indirect rotatable connection between the second ground plate 302 and the third ground plate 303.

Alternatively, in some other embodiments of this application, at least one of the first ground plate 301, the second ground plate 302, and the third ground plate 303 shown in FIG. 7 may be any one of the ground plane of the foregoing PCB, a transparent conducting layer in the first flexible display 10, and the foregoing support plate (for example, the first support plate 211, the second support plate 221, or the third support plate 231).

For ease of description, the following provides descriptions by using an example in which the first ground plate 301, the second ground plate 302, and the third ground plate 303 shown in FIG. 7 are respectively the first support plate 211 of the first housing 21, the second support plate 221 of the second housing 22, and the third support plate 231 of the third housing 23 shown in FIG. 8.

It can be learned from the foregoing that the antenna apparatus 30 shown in FIG. 7 further includes the first radiator 311. The first radiator 311 may be a planar inverted L/F antenna (planar inverted L/F antenna, PIFA/PILA). Alternatively, the first radiator 311 may be a flexible printed circuit (flexible printed circuit, FPC) antenna. Alternatively, the first radiator 311 may be a laser direct structuring (laser direct structuring, LDS) antenna. Alternatively, the first radiator 311 may be a microstrip disk antenna (microstrip disk antenna, MDA). Alternatively, the first radiator 311 may be a transparent conducting structure disposed in the third display part 103 of the first flexible display 10.

Alternatively, as shown in FIG. 8, a part of the third frame 232 of the third housing 23 may be used as the first radiator 311. The part that is of the third frame 232 and that is at least used as the first radiator 311 may be made of a metal material. In this way, when the third housing 23 is manufactured, the first radiator 311 can be prepared, thereby simplifying a manufacturing process. A manner of disposing the first radiator 311 is not limited in this application. For ease of description, the following provides descriptions by using an example in which a part of the third frame 232 of the third housing 23 is used as the first radiator 311.

In addition, it can be learned from FIG. 8 that a Z-axis is in a height direction of the electronic device 01. In a Z-axis direction, in the third housing 23, third frames 232 are disposed above (in a $Z^+$ direction) and below (in a $Z^-$ direction) the third support plate 231. In some embodiments of this application, in a process in which the user holds the electronic device 01, a hand of the user blocks the third frame 232 located below the third support plate 231. Therefore, to prevent the hand of the user from blocking a signal radiated by the first radiator 311, in some embodiments of this application, a part of the third frame 232 above (in the $Z^+$ direction) the third support plate 231, that is, a part of an upper frame 2321, may be used as the first radiator 311. In this way, when the user holds the electronic device, in the height direction of the electronic device 01, the first radiator 311 can be located at the top of the electronic device 01, so that the signal radiated by the first radiator 311 is not blocked in the process in which the user holds the electronic device 01, and strength of the signal radiated by the first radiator 311 is improved. Alternatively, in some other embodiments of this application, a part of the third frame 232 below (in the $Z^-$ direction) the third support plate 231, that is, a part of a lower frame 2322, may be used as the first radiator 311.

It should be noted that, for ease of description, the following uses an end that is of the electronic device 01 and that is away from the hand of the user in a process in which the user holds and uses the electronic device 01 as the top of the electronic device. For example, when the electronic device 01 includes a front-facing camera, an end at which the front-facing camera is located is the top of the electronic device 01. Alternatively, when the user holds the electronic device 01 and views a picture displayed in a normal orientation (which is not inverted or flipped), an upper end of the displayed picture is the top of the electronic device 01. In the following embodiments, the tops of the first housing 21, the second housing 22, the third housing 23, the first ground plate 301, the second ground plate 302, and the third ground plate 303 are in a same orientation as the top of the electronic device 01. Details are not described one by one herein.

Based on this, in some embodiments of this application, as shown in FIG. 8, the first housing 21 and the third housing 23 may be bent to form a first target angle α, the second housing 22 and the third housing 23 may be bent to form a second target angle β, and the first housing 21 and the second housing 22 are respectively located on two opposite sides of a plate surface of the third housing 23. In this case, an included angle between the first support plate 211 that is in the first housing 21 and that is used as the first ground plate 301 (as shown in FIG. 7) and the third support plate 231 that is in the third housing 23 and that is used as the third ground plate 303 (as shown in FIG. 7) is the first target angle α. Similarly, an included angle between the third support plate 231 that is in the third housing 23 and that is used as the third ground plate 303 (as shown in FIG. 7) and the second support plate 221 that is in the second housing 22 and that is used as the second ground plate 302 (as shown in FIG. 7) is the second target angle β. The first ground plate 301 and the second ground plate 302 can respectively rotate to two opposite sides of a plate surface of the third ground plate 303.

The plate surface of the third housing 23 (or the third ground plate 303) means that when the first housing 21, the second housing 22, and the third housing 23 shown in FIG. 2A are unfolded, that is, when an included angle between two adjacent housings in the first housing 21, the second housing 22, and the third housing 23 is approximately or equal to 180°, the first flexible display 10 connected to the housing 21 is in an unfolded state. In this case, the plate surface of the third housing 23 (or the third ground plate 303) may be parallel to a display surface of the first flexible display 10. Alternatively, when the electronic device 01 further includes the second flexible display 11 as shown in FIG. 4, if the second flexible display 11 is in an unfolded state, the plate surface of the third housing 23 (or the third ground plate 303) may be parallel to a display surface of the second flexible display 11.

Based on this, if the first ground plate 301, the second ground plate 302, and the third ground plate 303 are respectively the first support plate 211 of the first housing 21, the second support plate 221 of the second housing 22, and the third support plate 231 of the third housing 23 shown in FIG. 8, when the first flexible display 10 is in an unfolded state, the plate surface of the third housing 23 (or the third ground plate 303) may be parallel to a support surface that is of the third support plate 231 and that is used to support the first flexible display 10.

Based on this, to enable the first ground plate 301 and the second ground plate 302 to respectively rotate to two opposite sides of the plate surface of the third ground plate 303, in some embodiments of this application, the first housing 21 may rotate clockwise relative to the third housing 23 in an arrow direction shown in FIG. 8, so that the first ground plate 301 shown in FIG. 7 can rotate clockwise relative to the third ground plate 303 in the arrow direction. When the first target angle $\alpha$ is formed between the first ground plate 301 and the third ground plate 303, as shown in FIG. 9A, an end that is of the first ground plate 301 and that is away from the third ground plate 303 extends in an $X^-$ direction (downward).

In addition, the second housing 22 may rotate clockwise relative to the third housing 23 in an arrow direction shown in FIG. 8, so that the second ground plate 302 shown in FIG. 7 can rotate clockwise relative to the third ground plate 303 in the arrow direction. When the second target angle $\beta$ is formed between the second ground plate 302 and the third ground plate 303, as shown in FIG. 9A, an end that is of the second ground plate 302 and that is away from the third ground plate 303 extends in an $X^+$ direction (upward). The folding manner shown in FIG. 9A may be referred to as standard "S" folding.

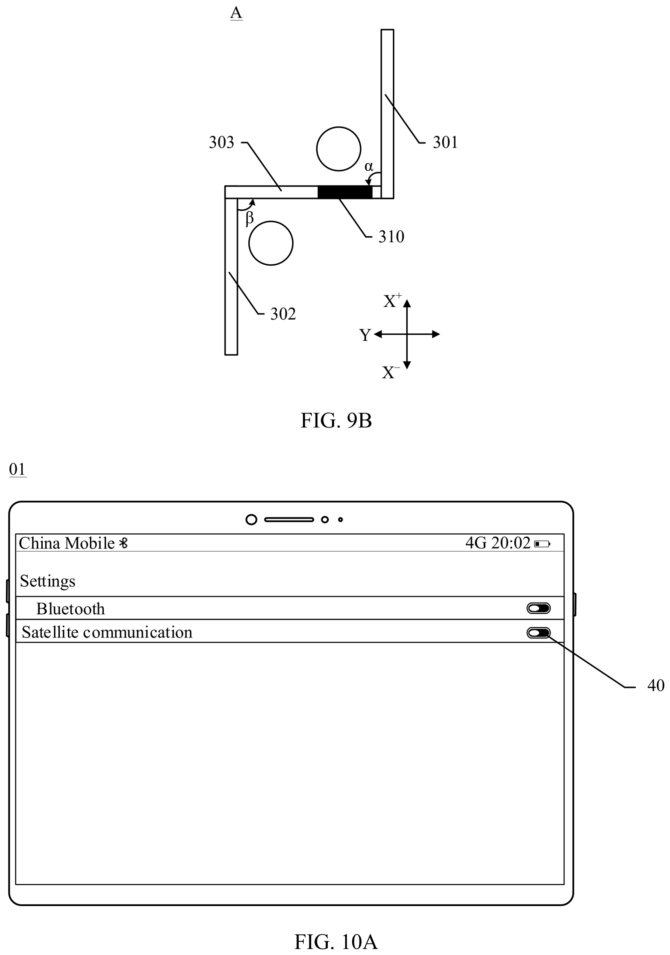

Alternatively, to enable the first ground plate 301 and the second ground plate 302 to respectively rotate to two opposite sides of the plate surface of the third ground plate 303, in some other embodiments of this application, the first housing 21 may rotate anticlockwise relative to the third housing 23, so that the first ground plate 301 shown in FIG. 9B can rotate anticlockwise relative to the third ground plate 303 in an arrow direction. When the first target angle $\alpha$ is formed between the first ground plate 301 and the third ground plate 303, as shown in FIG. 9B, an end that is of the first ground plate 301 and that is away from the third ground plate 303 extends in an $X^+$ direction (upward).

In addition, the second housing 22 may rotate anticlockwise relative to the third housing 23, so that the second ground plate 302 shown in FIG. 9B can rotate anticlockwise relative to the third ground plate 303 in an arrow direction. When the second target angle $\beta$ is formed between the second ground plate 302 and the third ground plate 303, as shown in FIG. 9B, an end that is of the second ground plate 302 and that is away from the third ground plate 303 extends in an $X^-$ direction (downward). The folding manner shown in FIG. 9B may be referred to as reverse "S" folding.

It can be learned from the foregoing description that the first housing 21 and the second housing 22 shown in FIG. 8 rotate in a same direction (for example, clockwise as shown in FIG. 9A, or anticlockwise as shown in FIG. 9B) relative to the third housing 23, so that the first ground plate 301 and the second ground plate 302 can respectively rotate to two opposite sides of the plate surface of the third ground plate 303.

Based on this, when the first ground plate 301 and the second ground plate 302 respectively rotate to the two opposite sides of the plate surface of the third ground plate 303, the electronic device 01 may be bent to a standard or reverse "S" state. In this case, the first target angle $\alpha$ may be formed between the first ground plate 301 and the third ground plate 303, and the second target angle $\beta$ may be formed between the second ground plate 302 and the third ground plate 303. In this case, the first radiator 311 shown in FIG. 9A is fed, and the first radiator 311 starts to receive and send signals, so that the first radiator 311 is in an operating state.

In this case, because the first radiator 311 is disposed in the third housing 23 shown in FIG. 8, a current on the first radiator 311 may be coupled to the third support plate 231 that is in the third housing 23 and that is used as the third ground plate 303 (as shown in FIG. 7). Because the first housing 21, the second housing 22, and the third housing 23 are electrically connected, the first ground plate 301, the second ground plate 302, and the third ground plate 303 in FIG. 7 are electrically connected. For example, electrical connection impedance of the first ground plate 301, the second ground plate 302, and the third ground plate 303 may be less than or equal to 10 $\Omega$. In this way, a current may be distributed on each of the first ground plate 301, the second ground plate 302, and the third ground plate 303.

In conclusion, in the electronic device 01, the third housing 23 rotates with the first housing 21 and the second housing 22. Therefore, the user performs a first operation, that is, bends the electronic device 01, to bend the included angle between the first housing 21 and the third housing 23 to the first target angle $\alpha$, and bend the included angle between the second housing 22 and the third housing 23 to the second target angle $\beta$. When the electronic device 01 detects, in response to the first operation of the user, that the included angle between the first housing 21 and the third housing 23 is the first target angle $\alpha$, and the included angle between the second housing 22 and the third housing 23 is the second target angle β, because the first housing 21, the second housing 22, and the third housing 23 are electrically connected, the current distributed on the first radiator 311 may be coupled to the third housing 23, and the current is distributed on each of the first housing 21, the second housing 22, and the third housing 23.

In this way, energy of radiation of the current distributed on the first housing 21 and the third housing 23 may be superimposed with energy of radiation of the current distributed on the third housing 23 and the second housing 22, to improve an antenna gain of the electronic device 01, so that the electronic device 01 can operate in a high-gain antenna mode, thereby improving signal strength of the electronic device 01. Because the radiation of the current distributed on the first housing 21 and the third housing 23 and the radiation of the current distributed on the second housing 22 and the third housing 23 are generated when the first housing 21, the second housing 22, and the third housing 23 are bent to target angles, when the user needs to use a high-gain antenna, the user only needs to perform the first operation to bend the electronic device 01. Therefore, another antenna, for example, a circularly polarized antenna, does not need to be additionally disposed in the electronic device 01, so that a problem of relatively low antenna radiation performance can be alleviated when antenna disposing space of the foldable electronic device 01 is limited.

Based on this, when the first housing 21 and the third housing 23 are bent to form the first target angle α, the second housing 22 and the third housing 23 are bent to form the second target angle β, and the first housing 21 and the second housing 22 are respectively located on two opposite sides of the third housing 23, an axial ratio of radiation of a current distributed on the first ground plate 301 (or the first housing 21) and the third ground plate 303 (or the third housing 23) and an axial ratio of radiation of a current distributed on the third ground plate 303 (or the third housing 23) and the second ground plate 302 (or the second housing 22) in FIG. 7 may be less than or equal to 3 dB.

In this case, the radiation of the current distributed on the first ground plate 301 and the third ground plate 303 and the radiation of the current distributed on the third ground plate 303 and the second ground plate 302 may be circularly polarized radiation. In this way, radiation at an included angle position between the first ground plate 301 and the third ground plate 303 may be equivalent to that of a circularly polarized antenna (referred to as a first circularly polarized antenna in embodiments of this application). Similarly, radiation at an included angle position between the third ground plate 303 and the second ground plate 302 may be equivalent to that of another circularly polarized antenna (referred to as a second circularly polarized antenna in embodiments of this application).

Radiation of a current distributed on two adjacent ground plates (for example, the first ground plate 301 and the third ground plate 303, or for another example, the third ground plate 303 and the second ground plate 302) means that after the current is distributed on the two adjacent ground plates, radiation that matches the current is generated due to electromagnetic induction, and parameters such as a magnitude and a direction of the radiation are related to a magnitude and a direction of the current. In addition, the radiation generated by the current may also affect the magnitude and direction of the current in turn. Therefore, the current distributed on the ground plates matches the radiation of the current.

In addition, in some embodiments of this application, the radiation (a circle is used to represent circularly polarized radiation in FIG. 9A) of the current distributed on the first ground plate 301 (or the first housing 21) and the third ground plate 303 (or the third housing 23) has a first circular polarization characteristic, the radiation of the current distributed on the third ground plate 303 (or the third housing 23) and the second ground plate 302 (or the second housing 22) has a second circular polarization characteristic, and the first circular polarization characteristic and the second circular polarization characteristic may be the same. The first circular polarization characteristic may be a circular polarization direction of the first circularly polarized antenna, and the second circular polarization characteristic may be a circular polarization direction of the second circularly polarized antenna. Therefore, that the first circular polarization characteristic and the second circular polarization characteristic are the same may mean that a circular polarization direction of the radiation at the included angle position between the first ground plate 301 and the third ground plate 303 (that is, radiation of the first circularly polarized antenna) may be the same as a circular polarization direction of the radiation at the included angle position between the third ground plate 303 and the second ground plate 302 (that is, radiation of the second circularly polarized antenna).

In this way, energy of the radiation at the included angle position between the first ground plate 301 and the third ground plate 303 may be superimposed at a far field with energy of the radiation at the included angle position between the third ground plate 303 and the second ground plate 302, so that the foldable electronic device obtains a high-gain antenna, thereby improving signal strength of the antenna of the electronic device 01.

It should be noted that polarization of an antenna is used to describe a vector direction of a radiation field of the antenna in a direction. Polarization may be used to describe a direction of an electric field. A polarization direction of an electric field is defined based on a movement track of an end of an electric field vector in a propagation direction of an electric wave.

In addition, an antenna gain (gain) means a ratio of power densities of signals that are generated by an actual antenna and an ideal radiating element at a same point in space under a condition of same input power. Therefore, the antenna gain may be used to measure a capability of an antenna to receive and send signals in a specific direction, and a unit may be dBi.

Specifically, before the electronic device 01 is bent to the standard or reverse "S" state, for example, when the first housing 21, the second housing 22, and the third housing 23 are unfolded, radiation having the first circular polarization characteristic is not generated at the included angle position between the first ground plate 301 and the third ground plate 303, and radiation having the second circular polarization characteristic is not generated at the included angle position between the third ground plate 303 and the second ground plate 302. In this case, an antenna gain of the antenna apparatus 30 is a gain of the first radiator 311.

After the electronic device 01 is bent to the standard or reverse "S" state, for example, when the first housing 21 and the third housing 23 are bent to form the first target angle α, the second housing 22 and the third housing 23 are bent to form the second target angle β, and the first housing 21 and the second housing 22 are respectively located on two opposite sides of the plate surface of the third housing 23, radiation having the first circular polarization characteristic is generated at the included angle position between the first ground plate 301 and the third ground plate 303, and radiation having the second circular polarization characteristic is generated at the included angle position between the third ground plate 303 and the second ground plate 302. Energy of the radiation having the first circular polarization characteristic is superimposed with energy of the radiation having the second circular polarization characteristic. A gain generated after the foregoing radiation is superimposed is used as the antenna gain of the antenna apparatus 30. Therefore, after the electronic device 01 is bent to the "S" state, the antenna gain of the antenna apparatus 30 increases. An increased value of the antenna gain is described by using an example in subsequent embodiments.

It can be learned from the foregoing description that, when the user needs to use a high-gain antenna, the electronic device 01 may be bent to the foregoing standard or reverse "S" state, and the first radiator 311 is fed, so that the antenna apparatus 30 operates in a high-gain antenna mode. The following uses an example to describe an application scenario in which the user uses the high-gain antenna mode of the antenna apparatus 30.

In some embodiments of this application, when the electronic device 01 is used as a satellite device to perform satellite communication, for example, when a satellite call is made or a satellite television is watched, the electronic device 01 needs to perform a satellite alignment operation. An angle, such as an azimuth angle, a pitch angle, or a polarization angle, of the antenna apparatus 30 may be adjusted through the satellite alignment operation, so that a center of the antenna apparatus 30 can be aligned with a target satellite, thereby improving antenna efficiency.

For example, when the electronic device 01 is in a state without a cellular network service, for example, when the electronic device 01 is in a region in which there is no mobile communication coverage, coverage is unachievable, or a communication system is damaged, such as an ocean, a desert, a grassland, or a no-man's land, the electronic device 01 may perform alignment with the target satellite, to communicate with another electronic device through the target satellite, that is, make a satellite call or receive and send SMS messages. When the user makes a satellite call, the electronic device 01 may play a voice signal in a loudspeaker mode by default.

Based on this, when the user needs to perform satellite communication, the electronic device 01 may be in the foregoing standard or reverse "S" state, so that the antenna apparatus 30 of the electronic device 01 operates in the high-gain antenna mode, thereby improving accuracy and efficiency of the satellite alignment operation, and improving call quality or information transmission efficiency of satellite communication. For example, when the user needs to perform satellite communication, an operation interface of the electronic device 01 may display corresponding indication information to indicate the user to bend the electronic device 01, and display an auxiliary animation to assist the user in bending the first housing 21, the second housing 22, and the third housing 23 in the electronic device 01 to specified positions, so that the electronic device 01 is in the foregoing standard or reverse "S" state. Alternatively, when the user is familiar with a step of bending the electronic device 01, the auxiliary animation may be directly displayed without displaying the indication information.

Specifically, as shown in FIG. 10A, a corresponding satellite communication option 40 may be set in a display interface of the electronic device 01. When the user needs to use the electronic device 01 as a satellite device, the user performs a second operation to trigger the satellite communication option 40, and the electronic device 01 enables a satellite communication function in response to the second operation of the user. For example, the user slides the satellite communication option 40 to the left (or the right), and the electronic device 01 enables the satellite communication function in response to the second operation of the user. When the user slides the satellite communication option 40 to the right (or the left), the satellite communication function is disabled.

It should be noted that enabling of the satellite communication function is described in FIG. 10A by using an example in which the electronic device 01 displays the satellite communication option 40. In some other embodiments of this application, a satellite communication icon may be further displayed on a home page of the electronic device 01. After triggering the icon, the user may enter a satellite communication menu, and enable or disable the satellite communication function.

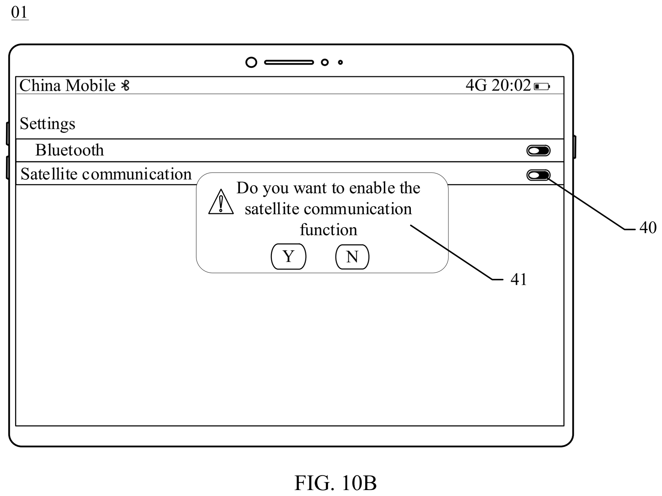

In addition, to prevent the user from accidentally touching the satellite communication option 40, after the satellite communication option 40 is in a triggered state, and before the electronic device 01 performs the satellite communication function, the electronic device 01 may further display a first information prompt box 41 shown in FIG. 10B. When the user triggers a "Y" button in the first information prompt box 41, the electronic device 01 enables the satellite communication function. On the contrary, when the user triggers an "N" button in the first information prompt box 41, the satellite communication function is still in a disabled state.

It should be noted that the display interface is described in FIG. 10A by using an example in which the electronic device 01 is in an unfolded state. Before the user bends the electronic device 01 to the foregoing standard or reverse "S" state, a folding status of the electronic device 01 is not limited in this application, and may be the unfolded state shown in FIG. 10A, or may be a fully folded state, or may be a state in which there is an included angle between any two of the first housing 21, the second housing 22, and the third housing 23 of the electronic device 01.

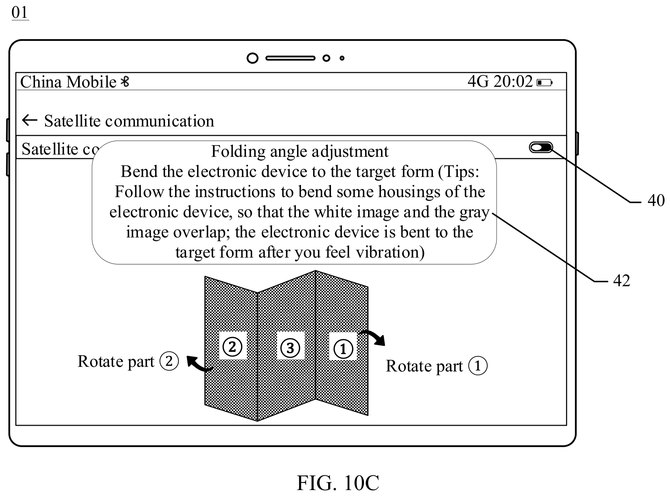

After the satellite communication function is enabled, the electronic device 01 may display a satellite communication menu shown in FIG. 10C. A gray image displayed in the menu indicates a final target form obtained after the electronic device 01 is bent, that is, the first housing 21 and the third housing 23 are bent to form the first target angle $\alpha$, and the second housing 22 and the third housing 23 are bent to form the second target angle $\beta$. A sequence number ① represents the first housing 21, a sequence number ② represents the second housing 22, and a sequence number ③ represents the third housing 23. In addition, the electronic device 01 may further display indication information 42 shown in FIG. 10C in response to the second operation (that is, triggering the satellite communication option 40) of the user. The indication information 42 indicates the user to bend the electronic device 01, to bend the first housing 21 and the third housing 23 to form the first target angle $\alpha$, and bend the second housing 22 and the third housing 23 to form the second target angle $\beta$.

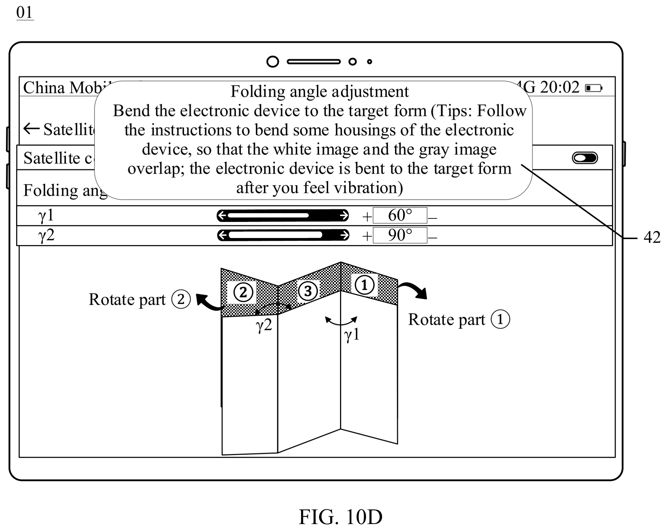

Then, the user may perform the first operation, that is, bend the electronic device 01. For example, the first housing 21 and the second housing 22 rotate clockwise relative to the third housing 23. Based on this, an angle sensor may be disposed in the electronic device 01, so that the electronic device 01 can detect, in real time in response to the first operation of the user, an included angle $\gamma1$ between the first housing 21 and the third housing 23 and an included angle $\gamma2$ between the second housing 22 and the third housing 23 shown in FIG. 10D. In a detection process, the electronic device 01 may display values of the included angle $\gamma1$ and the included angle $\gamma2$, and a progress bar related to a change of the values. In addition, the electronic device 01 may display a corresponding dynamic image (represented by a white image in the figure) based on a change of the included angle $\gamma1$ and the included angle $\gamma2$.

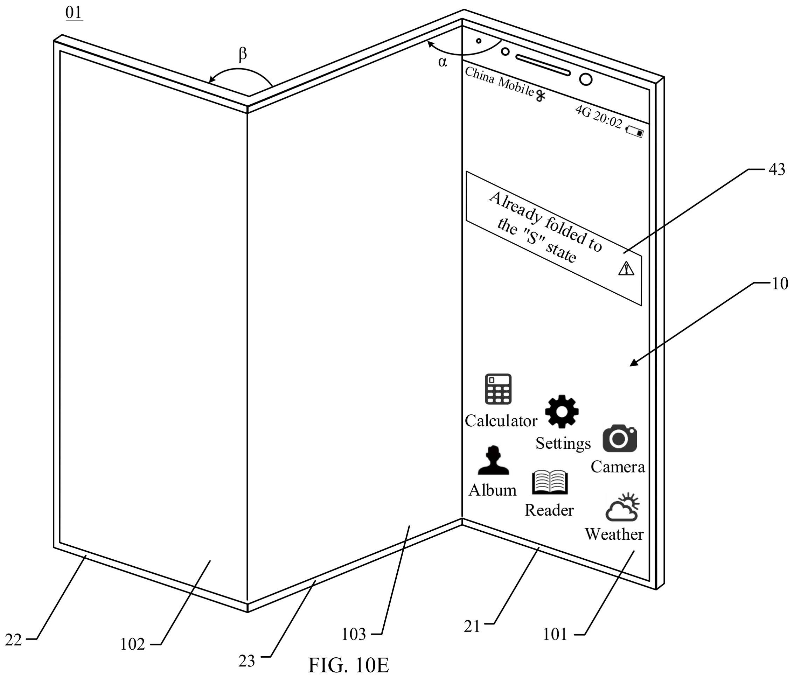

When the electronic device 01 detects that the included angle $\gamma1$ between the first housing 21 and the third housing 23 reaches the first target angle $\alpha$, the included angle $\gamma2$ between the second housing 22 and the third housing 23 reaches the second target angle $\beta$, and the first housing 21 and the second housing 22 are respectively located on two opposite sides of the third housing 23, a white image in FIG. 10D overlaps a gray image, and the electronic device 01 may vibrate to prompt the user that the electronic device 01 has been bent to a target form. Alternatively, as shown in FIG. 10E, the electronic device 01 may display a second information prompt box 43, to prompt the user that the electronic device 01 has been bent to the foregoing standard or reverse "S" state. In this case, the antenna apparatus 30 (as shown in FIG. 7) of the electronic device 01 operates in a high-gain antenna mode, so that when the user needs to select a target satellite from a plurality of satellites, or perform a satellite alignment operation on a target satellite, or perform satellite communication with a target satellite, accuracy and efficiency of signal transmission can be improved.

It should be noted that FIG. 10E is described by using an example in which when the electronic device 01 is bent to the "S" state, the first housing 21 rotates clockwise relative to the third housing 23, so that the display surface of the first display part 101 and the display surface of the third display part 103 are disposed facing each other, and the second housing 22 rotates clockwise relative to the third housing 23, so that the display surface of the second display part 102 and the display surface of the third display part 103 are disposed facing away from each other, that is, by using the foregoing standard "S" state as an example.

In some other embodiments of this application, when the electronic device 01 is bent to the "S" state, the first housing 21 may rotate anticlockwise relative to the third housing 23, so that the display surface of the first display part 101 and the display surface of the third display part 103 are disposed facing away from each other, and the second housing 22 rotates anticlockwise relative to the third housing 23, so that the display surface of the second display part 102 and the display surface of the third display part 103 are disposed facing each other. This is the foregoing reverse "S" state.

In addition, FIG. 10E is described by using an example in which the first display part 101 of the first flexible display 10 is used as a main display when the electronic device 01 is bent to the foregoing standard "S" state. In some other embodiments of this application, when the electronic device 01 is bent to the foregoing standard or reverse "S" state, the second display part 102 or the third display part 103 may be used as a main display.

In addition, the foregoing is merely an example description of an application scenario in which the electronic device 01 is bent to the standard or reverse "S" state, so that the antenna apparatus 30 operates in the high-gain antenna mode, and does not constitute a limitation on the antenna apparatus 30 operating in the high-gain antenna mode. In some other embodiments of this application, when the electronic device 01 is bent to the standard or reverse "S" state, the antenna apparatus 30 may be further configured to receive and send signals in a specific band. In addition, FIG. 10A, FIG. 10B, FIG. 10C, FIG. 10D, and FIG. 10E are merely examples for describing the display interface of the electronic device 01, and do not constitute a limitation on display content of the display interface.

In addition, in the foregoing embodiments, implementation of the satellite communication function is described by using an example in which the user first performs the second operation to trigger the satellite communication option 40 shown in FIG. 10A, then the electronic device 01 displays the indication information 42 shown in FIG. 10C, and the user performs the first operation by referring to the indication information 42 and an auxiliary animation image (the white image and the gray image shown in FIG. 10D) displayed by the electronic device 01 to bend the electronic device 01 to the foregoing standard or reverse "S" state. In some other embodiments of this application, the satellite communication function may be in an enabled state by default, and the user does not need to trigger the satellite communication function. In addition, after the user is familiar with a bending method of the electronic device 01, it may be specified that the indication information 42 is no longer displayed. In this case, when the user performs the first operation to bend the electronic device 01, the electronic device 01 may display the auxiliary animation image in response to the first operation of the user, so that the user bends the electronic device 01 to the foregoing standard or reverse "S" state.

It can be learned from the foregoing description that, to enable the antenna apparatus 30 (as shown in FIG. 7) of the electronic device 01 to operate in the foregoing high-gain antenna mode, when the electronic device 01 is bent to the foregoing "S" state, the current on the first radiator 311 is coupled to the third ground plate 303, the radiation (a circle is used to represent circularly polarized radiation in FIG. 9A) of the current distributed on the first ground plate 301 and the third ground plate 303 has the first circular polarization characteristic, and the radiation of the current distributed on the third ground plate 303 and the second ground plate 302 has the second circular polarization characteristic. In addition, the first circular polarization characteristic is the same as the second circular polarization characteristic, that is, the circular polarization directions are the same, so that energy of the two radiations having the circular polarization characteristics can be superimposed in a far field.

The following uses a specific embodiment to describe a disposing manner of the first radiator 311 by using an example, so that the current on the first radiator 311 is coupled to the third ground plate 303, the radiation of the current distributed on the first ground plate 301 and the third ground plate 303 has the first circular polarization characteristic, and the radiation of the current distributed on the third ground plate 303 and the second ground plate 302 has the second circular polarization characteristic.

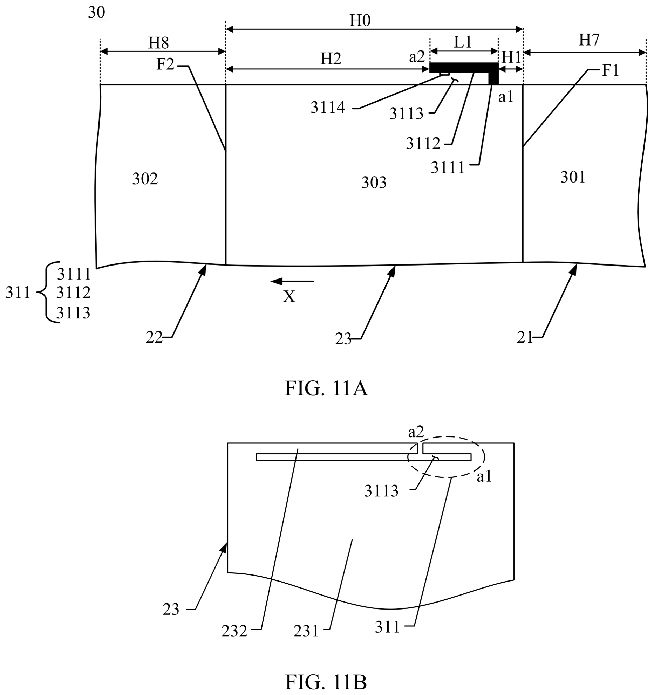

In some embodiments of this application, the foregoing first radiator 311 may include a first radiator 311 shown in FIG. 11A. For example, the first radiator 311 may include a part of an upper frame 2321 (as shown in FIG. 8) located above the third ground plate 303 (that is, the third support plate in FIG. 8). The first radiator 311 may include a ground end a1 and an open end a2. The third housing 23 may have a first side surface F1 and a second side surface F2 that are disposed opposite to each other, the first side surface F1 is close to the first housing 21, and the second side surface F2 is close to the second housing 22. The ground end a1 of the first radiator 311 is close to the first side surface F1, and the open end a2 is close to the second side surface F2. A distance H1 between the ground end a1 of the first radiator 311 and the first side surface F1 may be less than a distance H2 between the open end a2 of the first radiator 311 and the second side surface F2 (that is, H1<H2), so that the first radiator 311 may be disposed close to the first housing 21.

In addition, the distance H1 between the ground end a1 of the first radiator 311 and the first side surface F1 may meet $H1 \leq \lambda_1/4$, and the distance H2 between the open end a2 of the first radiator 311 and the second side surface F2 may meet $\lambda_1/4 \leq H2 \leq \lambda_1/2$. $\lambda_1$ is a wavelength corresponding to an operating band (frequency range) of the first radiator 311. In addition, the first radiator 311 is a quarter-wave antenna. In subsequent embodiments, with reference to current distribution on the first ground plate 301, the second ground plate 302, and the third ground plate 303, setting of electrical length ranges and physical sizes of H1 and H2 is described by using an example.

In embodiments of this application, a length of a radiator or an antenna is an electrical length, and is not a physical length (or referred to as a geometric length or a mechanical length) of the radiator. The electrical length means a ratio of a physical length of a transmission line to a wavelength of an electromagnetic wave transmitted on the line. The electrical length is $d/\lambda$ obtained by normalizing the wavelength $\lambda$ to the length of the transmission line (where d is the physical length of the transmission line). In addition, the operating band means a frequency range that meets an indicator requirement, and a width of the operating band may be referred to as an operating bandwidth.

Based on this, the third support plate 231 of the third housing 23 shown in FIG. 11B may be the third ground plate 303 in FIG. 11A. Therefore, the ground end a1 of the first radiator 311 may be electrically connected to the third ground plate 303 in the third housing 23, so that the first radiator 311 is grounded. For example, the ground end a1 of the first radiator 311 may be in contact with the third ground plate 303 as shown in FIG. 11A, to implement a direct electrical connection. In addition, a feed end of the first radiator 311 may be close to the open end a2 of the first radiator 311.

In some embodiments of this application, as shown in FIG. 11A, the first radiator 311 may include a first stub 3111 and a second stub 3112. The first stub 3111 may be disposed close to the first housing 21. One end, for example, a lower end, of the first stub 3111 is used as the ground end a1 of the first radiator 311, and is in contact with the third ground plate 303, so that the first stub 3111 can be directly electrically connected to the third ground plate 303.

In addition, the second stub 3112 and the first stub 3111 may be disposed in a crossed manner. For example, the second stub 3112 and the first stub 3111 may be disposed perpendicularly. One end of the second stub 3112 is connected to the other end of the first stub 3111, for example, an upper end of the first stub 3111. The other end of the second stub 3112 is used as the open end a2 of the first radiator 311, and extends toward the second ground plate 302. In addition, there may be a first opening 3113 between the second stub 3112 and the third ground plate 303 (that is, the third support plate 231). A part that is of the second stub 3112 and that is away from the first stub 3111 may be used as a feed end 3114 of the first radiator 311. The feed end 3114 of the first radiator 311 may be electrically connected to a PCB in the electronic device 01, to feed the first radiator 311 by using the PCB, so that the first radiator 311 is in an operating state.

For example, the first stub 3111 and the second stub 3112 are strip-shaped, and in extension directions of the first stub 3111 and the second stub 3112, a length of the first stub 3111 may be less than a length of the second stub 3112, so that the first stub 3111 is mainly configured to implement grounding of the first radiator 311, and the second stub 3112 is mainly configured to implement signal radiation of the first radiator 311. Based on this, in a length direction of the first stub 3111 (that is, the extension direction of the first stub 3111), a dimension of the first opening 3113 may be less than or equal to 4 mm, so as to facilitate coupling of the current on the first radiator 311 to the third ground plate 303.

For example, the first stub 3111 and the second stub 3112 may be connected to form an integral structure. For example, materials of the first stub 3111 and the second stub 3112 may be the same, and the first stub 3111 and the second stub 3112 are prepared simultaneously by using a same manufacturing process. Alternatively, the first stub 3111 and the second stub 3112 may be prepared separately, and then connected by using a conducting connection piece, for example, a conducting adhesive or a solder.

FIG. 11A is described by using an example in which only the first radiator 311 is disposed in the third housing 23. In some other embodiments of this application, on a left side of the first radiator 311, the electronic device may further include another antenna, for example, a global positioning system (global positioning system, GPS) antenna or a Wi-Fi antenna.

In addition, it can be learned from the foregoing description that a part of the third frame 232 in the third housing 23 shown in FIG. 11B may be used as the first radiator 311, and the first radiator 311 and the first opening 3113 may be formed through slotting on the third housing 23. A right side of a slotting position on the third frame 232 is the open end a2 of the first radiator 311. A right end of the first opening 3113 is close to the ground end a1 of the first radiator 311.

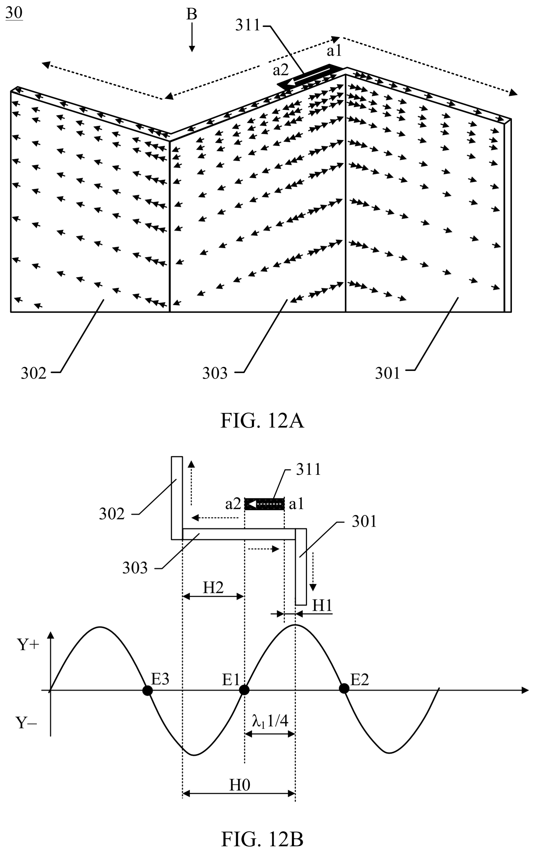

It can be learned from the foregoing that, because the ground end a1 of the first radiator 311 is electrically connected to the third ground plate 303, after the first radiator 311 is fed, it can be learned from a diagram of current distribution shown in FIG. 12A that the current (a white arrow) on the first radiator 311 may be coupled to the third ground plate 303. Because the first ground plate 301, the second ground plate 302, and the third ground plate 303 are electrically connected, the current is also distributed on the first ground plate 301 and the second ground plate 302.

Specifically, an electrical signal fed into the first radiator 311 is usually a sine electrical signal. Therefore, the current on the first radiator 311 is also distributed in a sinusoidal manner. As shown in FIG. 12B, there may be a large current at the ground end a1, and there may be a small current at the open end a2. Correspondingly, in a part that is of the third ground plate 303 and that is covered by the first radiator 311, a current at an end close to the first ground plate 301 is relatively large, and a current at an end close to the second ground plate 302 is relatively small. Based on this, because the first radiator 311 is a quarter-wave antenna, and the distance $H1 \leq \lambda_1/4$, in the third ground plate 303, a current distributed on the part covered by the first radiator 311 and a part on the right of the part is within a range of $\lambda_1/4$, and the current is distributed on an upper half axis Y+, and does not reach a zero point E2. Therefore, a direction of the current does not change. In this way, the current in the part that is of the third ground plate 303 and that is covered by the first radiator 311 flows rightward, and continuously flows into the first ground plate 301.

In addition, it can be learned from the foregoing that H2 in FIG. 12B meets a range of $\lambda_1/4 \leq H2 \leq \lambda_1/2$. Therefore, a current distributed on the left of the part that is in the third ground plate 303 and that is covered by the first radiator 311 is within a range of $\lambda_1/2$, and the current is distributed on a lower half axis Y- and does not reach a zero point E3. Therefore, after a direction of the current changes at a position corresponding to the open end a2, the direction of the current no longer changes. In this way, a part of the current on the third ground plate 303 flows leftward from the position corresponding to the open end a2, and flows into the second ground plate 302.

Based on this, to enable current distribution on the third ground plate 303 to be that shown in FIG. 12B, and ensure that most currents on the second ground plate 302 are not reversed and are kept in an upward direction shown in FIG. 12B, a current distributed at a junction position between the second ground plate 302 and the third ground plate 303 needs to be near a current peak position between the zero point E1 and the zero point E3, so that current intensity of the current distributed at the junction position between the second ground plate 302 and the third ground plate 303 is within 80% of a maximum current value. When H2 meets a range of $\lambda_1/4 \leq H2 \leq \lambda_1/2$, a length of H2 may be near $\lambda_1/4$, for example, within a range of a deviation of $\lambda_1/10$ from $\lambda_1/4$.

Similarly, to enable current distribution on the third ground plate 303 to be that shown in FIG. 12B, and ensure that most currents on the first ground plate 301 are not reversed and are kept in a downward direction shown in FIG. 12B, a current distributed at a junction position between the first ground plate 301 and the third ground plate 303 needs to be near a current peak position between the zero point E1 and the zero point E2, so that current intensity of the current distributed at the junction position between the first ground plate 301 and the third ground plate 303 is within 80% of a maximum current value. When H1 meets a range of $H1 \leq \lambda_1/4$, a length of H1 may be near $\lambda_1/4$, for example, within a range of a deviation of $\lambda_1/10$ from $\lambda_1/4$. Positions that are on the first radiator 311 and that correspond to the ground end a1 and the open end a2 of the first radiator 311 are positions of vertical projections of the ground end a1 and the open end a2 of the first radiator 311 on the first radiator 311.

For example, the operating band of the first radiator 311 may be 2 GHz to 2.2 GHz, so as to implement the foregoing satellite communication. Based on this, a range of the distance H1 may be 0 mm≤H1≤10 mm, and a dimension range of the distance H2 is 30 mm≤H2. A range of a length L1 of the first radiator 311 may be: 8 mm≤L1≤30 mm.

In this way, the first radiator 311 may be a quarter-wave antenna, and when a dielectric constant of a filling medium (for example, plastic or glass fiber) in the third housing 23 is 2 to 9, the distance H1 may meet H1$\leq\lambda_1$/4, and the distance H2 may meet $\lambda_1$/4$\leq$H2$\leq\lambda_1$/2. Therefore, as shown in FIG. 12B, a position corresponding to the open end a2 in the third ground plate 303 is a current reverse point, and the current on the third ground plate 303 is reversed at the current reverse point. A part of the current flows rightward and flows into the first ground plate 301, so that circularly polarized radiation is formed between the first ground plate 301 and the third ground plate 303, and another part of the current flows leftward and flows into the second ground plate 302, so that circularly polarized radiation is formed between the second ground plate 302 and the third ground plate 303.

When a medium (for example, plastic or glass fiber) is filled around a radiator (for example, the radiator is a quarter-wave antenna), a wavelength $\lambda_0$ of the radiator in free space (that is, a wavelength when no medium is filled around the radiator), a dielectric constant $\varepsilon_\gamma$ of the medium, and an actual physical size H of the quarter-wave antenna may satisfy the following formula (1):

$$H \approx \frac{\lambda_0}{4\sqrt{(1+\varepsilon_\gamma)/2}} \qquad\qquad (1)$$

It can be learned from formula (1) that, when the dielectric constant $\varepsilon_\gamma$ of the medium filled around the radiator is larger, the actual physical size H of the radiator is smaller. On the contrary, when the dielectric constant $\varepsilon_\gamma$ of the medium filled around the radiator is smaller, the actual physical size H of the radiator is larger.

It can be learned from the foregoing description that a dielectric constant $\varepsilon_\gamma$ of a filling medium around a radiator in embodiments of this application, for example, the first radiator 311, may range from 2 to 9. In this case, it can be learned from formula (1) that a range of the actual physical size H of the radiator may be $\lambda_0$/4.9 to $\lambda_0$/8.9. That is, when the dielectric constant $\varepsilon_\gamma$ is set to a minimum value 2, a maximum actual physical size $H_{max}$ of the radiator is equal to $\lambda_0$/4.9; or when the dielectric constant $\varepsilon_\gamma$ is set to a maximum value 9, a minimum actual physical size $H_{min}$ of the radiator is equal to $\lambda_0$/8.9. It can be learned that, from $H_{max}$ to $H_{min}$, a size variation does not exceed half of $H_{max}$.

The foregoing describes impact of the dielectric constant of the filling medium on the actual physical size of the antenna radiator by using an example in which the radiator, for example, the first radiator 311, is a quarter-wave antenna. When the radiator, for example, the first radiator 311, is a half-wave antenna, a relationship between a dielectric constant of a filling medium and an actual physical size of the antenna radiator is the same as that described above, and a difference lies in that the number "4" in the denominator in formula (1) is replaced with the number "2".

Based on this, when the distance H1 meets H1$\leq\lambda_1$/4, and the distance H2 may meet $\lambda_1$/4$\leq$H2$\leq\lambda_1$/2, a distance H0 shown in FIG. 12B may meet $\lambda_1$/2$\leq$H0$\leq$3$\lambda_1$/4. In this way, when H0<$\lambda_1$/2, a width of the third ground plate 303 is too short. Consequently, the current at the junction position between the third ground plate 303 and the second ground plate 302 is too far from a current peak between the zero point E1 and the zero point E2, and the current is relatively small, thereby reducing energy of circularly polarized radiation formed between the second ground plate 302 and the third ground plate 303. Alternatively, when H0>3$\lambda_1$/4, a width of the third ground plate 303 is too long. Consequently, two current reverse points, for example, the zero point E1 and the zero point E3 (or the zero point E1 and the zero point E2), occur on the third ground plate 303. Therefore, it is difficult to form circularly polarized radiation between the second ground plate 302 and the third ground plate 303 (or between the first ground plate 301 and the third ground plate 303). For example, when the range of the distance H1 may be 0 mm≤H1≤10 mm, and the dimension range of the distance H2 is 30 mm≤H2, a range of H0 may be 55 mm≤H0≤80 mm. In this way, the distance H0 may meet $\lambda_1$/2$\leq$H0$\leq$3$\lambda_1$/4.

Based on this, in a first direction X shown in FIG. 11A, the first housing 21 has a width H7, and the second housing 22 has a width H8. H0/2×≤H7≤H0; and H0/2≤H8≤H0. When the first housing 21, the second housing 22, and the third housing 23 are unfolded, the first direction X is parallel to a direction from the first side surface F1 to the second side surface F2. In this case, maximum values of the width H7 of the first housing 21 and the width H8 of the second housing 22 may be equal to the width H0 of the third housing 23, and minimum values of the width H7 of the first housing 21 and the width H8 of the second housing 22 may be half of the width H0 of the third housing 23.

In this way, as shown in FIG. 12B, most currents on the first ground plate 301 (the first support plate 211 of the first housing 21) can keep flowing downward, and current reverse occurs only at an end that is of the first ground plate 301 and that is away from the third ground plate 303 (the third support plate 231 of the third housing 23). Similarly, most currents on the second ground plate 302 (the second support plate 221 of the second housing 22) can keep flowing upward, and current reverse occurs only at an end that is of the second ground plate 302 and that is away from the third ground plate 303. Therefore, a proportion of reverse currents on the second ground plate 302 and the first ground plate 303 is reduced, to reduce impact of the reverse currents on antenna performance.

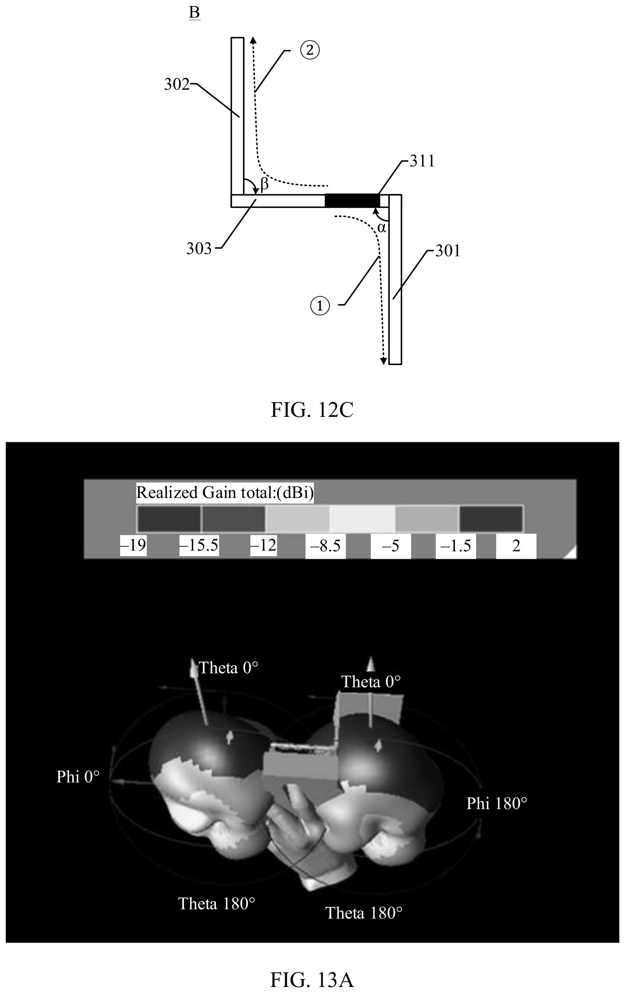

In this case, as shown in FIG. 12C (a top view obtained in a direction B in FIG. 12A), a first current ① distributed on the first ground plate 301 and the third ground plate 303 flows from the third ground plate 303 to the first ground plate 301, and has a "left-handed screw" characteristic (the left hand is used, the thumb is outward, and the other four fingers are in a same direction as the current). A second current ② distributed on the second ground plate 302 and the third ground plate 303 flows from the third ground plate 303 to the second ground plate 302, and also has a "left-handed screw" characteristic. Therefore, when the electronic device 01 is bent to the standard "S" state, the radiation of the current distributed on the first ground plate 301 and the third ground plate 303 has the first circular polarization characteristic (that is, left-handed), and the radiation of the current distributed on the third ground plate 303 and the second ground plate 302 has the second circular polarization characteristic (that is, left-handed), so that energy of the two radiations having the circular polarization characteristics can be superimposed in a far field.

In some embodiments of this application, the first current ① distributed on the first ground plate 301 and the third ground plate 303 may be orthogonal to the second current ② distributed on the second ground plate 302 and the third ground plate 303, so that current distribution on the third ground plate 303 shown in FIG. 12A can have a more distinct current reverse phenomenon at a position corresponding to the open end a2 of the first radiator 311.

To make the first current ① and the second current ② orthogonal, in some other embodiments of this application, as shown in FIG. 12C, when the first ground plate 301 and the second ground plate 302 are respectively located on two opposite sides of the plate surface of the third ground plate 303, the first target angle $\alpha$ is formed between the first ground plate 301 and the third ground plate 303, and the second target angle $\beta$ is formed between the third ground plate 303 and the second ground plate 302. A range of the first target angle $\alpha$ and a range of the second target angle $\beta$ are between 60° and 120°.

In this way, when the first target angle $\alpha$ is less than 60°, the included angle between the first ground plate 301 and the second ground plate 302 is relatively small, and transition is not smooth enough. Therefore, the first current ① distributed on the first ground plate 301 and the second ground plate 302 has a relatively large flow direction change at the included angle position between the first ground plate 301 and the second ground plate 302. This is not conducive to forming the "left-handed screw" characteristic shown in FIG. 12C. Therefore, the first current ① is difficult to be orthogonal to the second current ②.

Alternatively, when the first target angle $\alpha$ is greater than 120°, the included angle between the first ground plate 301 and the second ground plate 302 is relatively large and is close to a straight angle. Therefore, the first current ① distributed on the first ground plate 301 and the second ground plate 302 has a relatively small flow direction change at the included angle position between the first ground plate 301 and the second ground plate 302. This is not conducive to forming the "left-handed screw" characteristic shown in FIG. 12C. Therefore, the first current ① is difficult to be orthogonal to the second current ②.

Technical effects achieved when the range of the second target angle $\beta$ is between 60° and 120° are similar to the technical effects of the first target angle $\alpha$. Details are not described herein again. For example, the first target angle $\alpha$ or the second target angle $\beta$ may be 60°, 70°, 80°, 90°, 100°, 110°, or 120°.

For example, when the first target angle $\alpha$ and the second target angle $\beta$ are close to or equal to 90°, if the user holds the electronic device 01 by using the left hand, the electronic device 01 may be simulated to obtain a pattern of an antenna shown in FIG. 13A. The pattern of the antenna is used to describe a radiation characteristic of the antenna in each direction, for example, strength of a radiation field in each direction. The strength may be represented by using a gain. Generally, a part with a deeper color in the pattern indicates higher strength of the radiation field and a higher gain.

In FIG. 13A, a spherical shape on the left is an upstream pattern, and a spherical shape on the right is a downstream pattern. It can be learned from the foregoing description that, in embodiments of this application, the first radiator 311 in the electronic device 01 is located at the top of the electronic device 01. Therefore, when the user holds the electronic device 01 by using the left hand, it can be learned from FIG. 13A that both an upstream maximum gain and a downstream maximum gain (about 2 dBi), that is, parts with a deepest color, are located in an upper hemispherical part.

This may indicate that when the user holds, by using the left hand, the electronic device 01 bent to the "S" state, and the first radiator 311 operates, the radiation (having the first circular polarization characteristic) of the current distributed on the first ground plate 301 and the third ground plate 303 and the radiation (having the second circular polarization characteristic) of the current distributed on the third ground plate 303 and the second ground plate 302 shown in FIG. 12C each radiate an electromagnetic wave to space. The electromagnetic wave having the first circular polarization characteristic and the electromagnetic wave having the second circular polarization characteristic are superimposed at the top of the electronic device 01, so that a radiation field of the electronic device 01 becomes stronger, and the electronic device 01 obtains a relatively high gain (about 2 dBi).

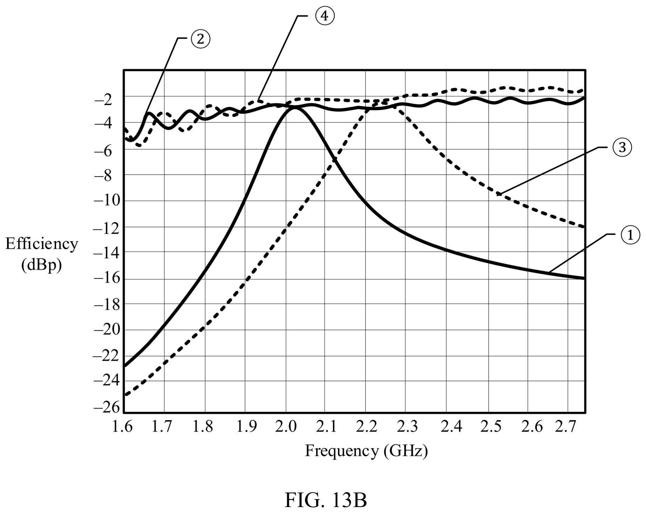

Based on this, FIG. 13B shows upstream and downstream efficiency of the first radiator 311. A curve ① is upstream (a center frequency is 2.02 GHz) antenna system efficiency (close to -3 dBp) of the first radiator 311. A curve ② is upstream (a center frequency is 2.02 GHz) antenna radiation efficiency (-3 dBp) of the first radiator 311. A curve ③ is downstream (a center frequency is 2.24 GHz) antenna system efficiency (close to -2.5 dBp) of the first radiator 311. A curve ④ is downstream (a center frequency is 2.24 GHz) antenna radiation efficiency (-2.5 dBp) of the first radiator 311. The antenna system efficiency is usually lower than the antenna radiation efficiency. It can be learned from FIG. 13B that, when the first radiator 311 is in upstream, the antenna system efficiency and the antenna radiation efficiency are approximately -3 dBp, and when the first radiator 311 is in downstream, the antenna system efficiency and the antenna radiation efficiency are approximately -2.5 dBp. Therefore, when the user holds, by using the left hand, the electronic device 01 bent to the standard "S" state, and the first radiator 311 operates, the electronic device 01 can obtain relatively high antenna efficiency.

It should be noted that antenna radiation efficiency is used to measure effectiveness of an antenna in converting a high-frequency current or guided wave energy into radio wave energy, and is a ratio of total power radiated by the antenna to net power obtained by the antenna from a feeder. A return loss is usually not considered for the antenna radiation efficiency. Antenna system efficiency is actual efficiency for which an antenna return loss (usually negative) is considered. Therefore, a smaller antenna return loss indicates higher antenna system efficiency; and a larger antenna return loss indicates lower antenna system efficiency.

In addition, upstream and downstream directivity factors of the first radiator 311 when the user holds the electronic device 01 by using the left hand may be obtained through simulation, as shown in Table 1.

Table 1

| Signal transmission | Upstream | Downstream |
|---|---|---|
| Center frequency | 2.02 GHz | 2.24 GHz |
| Left-handed directivity factor | 4.2 | 4.8 |
| Right-handed directivity factor | 4 | 5 |

It can be learned from Table 1 that, when the user holds, by using the left hand, the electronic device 01 bent to the standard "S" state, and the first radiator 311 operates, an upstream directivity factor of the antenna may be 4.2 dBi, and a downstream directivity factor of the antenna may be 4.8 dBi. In a related technology, a directivity factor of a single antenna is usually 0.1 dBi to 1 dBi. This may indicate that the radiation of the current distributed on the first ground plate 301 and the third ground plate 303 shown in FIG. 12C may be superimposed with the radiation of the current distributed on the third ground plate 303 and the second ground plate 302, so that when the user holds, by using the left hand, the electronic device 01 bent to the standard "S" state, the electronic device 01 can obtain a relatively large directivity factor.

Because the directivity factor may indicate a parameter of a concentration degree of electromagnetic wave radiation of the antenna in a direction, for example, at the top of the electronic device 01, when the electronic device 01 obtains a relatively large directivity factor at the top of the electronic device, it may indicate that a concentration degree of electromagnetic wave radiation of the electronic device 01 at the top of the electronic device is relatively high. Therefore, as shown in FIG. 13A, the electronic device 01 may obtain a relatively high antenna gain at the top of the electronic device.

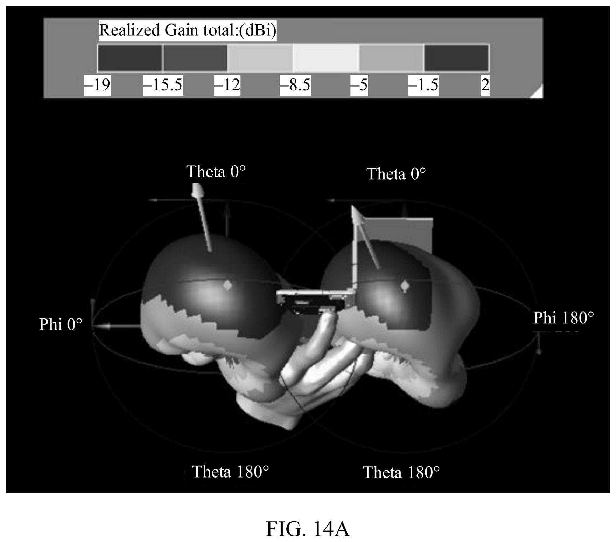

The foregoing describes the antenna gain, the upstream antenna efficiency, and the downstream antenna efficiency of the electronic device 01 by using an example in which the user holds the electronic device 01 by using the left hand. In some other embodiments of this application, when the user holds the electronic device 01 by using the right hand, and the first radiator 311 in the electronic device 01 is located at the top of the electronic device 01, as shown in FIG. 14A, a spherical shape on the left is an upstream pattern, and a spherical shape on the right is a downstream pattern. It can be learned from FIG. 14A that both an upstream maximum gain and a downstream maximum gain (about 2 dBi), that is, parts with a deepest color, are located in an upper hemispherical part.

This may indicate that, when the user holds, by using the right hand, the electronic device 01 bent to the standard "S" state, and the first radiator 311 operates, the radiation of the current distributed on the first ground plate 301 and the third ground plate 303 shown in FIG. 12C may be superimposed at the top of the electronic device 01 with the radiation of the current distributed on the third ground plate 303 and the second ground plate 302, so that a radiation field of the electronic device 01 becomes stronger, and the electronic device 01 obtains a relatively high gain (about 2 dBi).

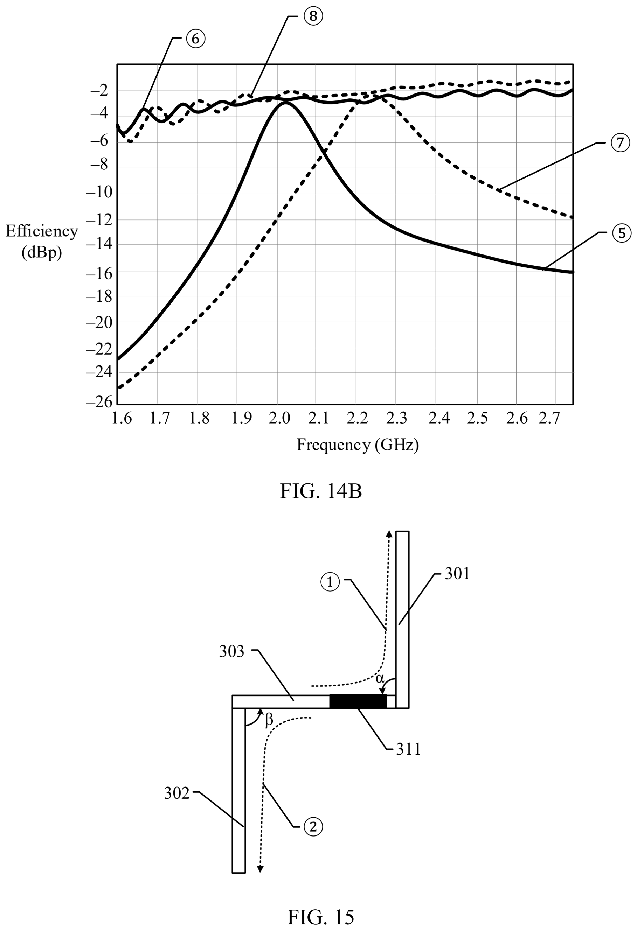

Based on this, FIG. 14B shows upstream and downstream efficiency of the first radiator 311. A curve ⑤ is upstream (a center frequency is 2.02 GHz) antenna system efficiency (close to -3 dBp) of the first radiator 311. A curve ⑥ is upstream (a center frequency is 2.02 GHz) antenna radiation efficiency (-3 dBp) of the first radiator 311. A curve ⑦ is downstream (a center frequency is 2.24 GHz) antenna system efficiency (close to -2.5 dBp) of the first radiator 311. A curve ⑧ is downstream (a center frequency is 2.24 GHz) antenna radiation efficiency (-2.5 dBp) of the first radiator 311. It can be learned from FIG. 14B that, when the first radiator 311 is in upstream, the antenna system efficiency and the antenna radiation efficiency are approximately - 3 dBp, and when the first radiator 311 is in downstream, the antenna system efficiency and the antenna radiation efficiency are approximately -2.5 dBp. Therefore, when the user holds, by using the right hand, the electronic device 01 bent to the standard "S" state, and the first radiator 311 operates, the electronic device 01 can obtain relatively high antenna efficiency.

In addition, upstream and downstream directivity factors of the first radiator 311 when the user holds the electronic device 01 by using the right hand may be obtained through simulation, as shown in Table 1. Similarly, it can be learned from Table 1 that, when the user holds, by using the right hand, the electronic device 01 bent to the standard "S" state, and the first radiator 311 operates, an upstream directivity factor of the antenna may be 4 dBi, and a downstream directivity factor of the antenna may be 5 dBi. In a related technology, a directivity factor of a single antenna is usually 0.1 dBi to 1 dBi. This may indicate that the radiation of the current distributed on the first ground plate 301 and the third ground plate 303 shown in FIG. 12C may be superimposed with the radiation of the current distributed on the third ground plate 303 and the second ground plate 302, so that when the user holds, by using the right hand, the electronic device 01 bent to the standard "S" state, the electronic device 01 can obtain a relatively large directivity factor. It may indicate that a concentration degree of electromagnetic wave radiation at the top of the electronic device 01 is relatively high. Therefore, as shown in FIG. 14A, the electronic device 01 can obtain a relatively high antenna gain at the top of the electronic device.

The foregoing descriptions are provided by using an example in which both the circular polarization characteristic of the radiation of the current distributed on the first ground plate 301 and the third ground plate 303 and the circular polarization characteristic of the radiation of the current distributed on the third ground plate 303 and the second ground plate 302 shown in FIG. 12C are left-handed.

In some other embodiments of this application, as shown in FIG. 9B, when the first ground plate 301 in the electronic device 01 rotates anticlockwise relative to the third ground plate 303 in an arrow direction, to extend in the $X^+$ direction (upward), and the second ground plate 302 rotates anticlockwise relative to the third ground plate 303 in an arrow direction, to extend in the $X^-$ direction (downward), that is, when the electronic device is bent to the foregoing reverse "S" state, as shown in FIG. 15, the first current ① distributed on the first ground plate 301 and the third ground plate 303 has a "right-handed screw" characteristic, and a first circular polarization characteristic of radiation of the first current ① is right-handed. The second current ② distributed on the second ground plate 302 and the third ground plate 303 also has a "right-handed screw" characteristic, and a second circular polarization characteristic of radiation of the second current ② is right-handed. Therefore, energy of the two radiations having the circular polarization characteristics can be superimposed in a far field.

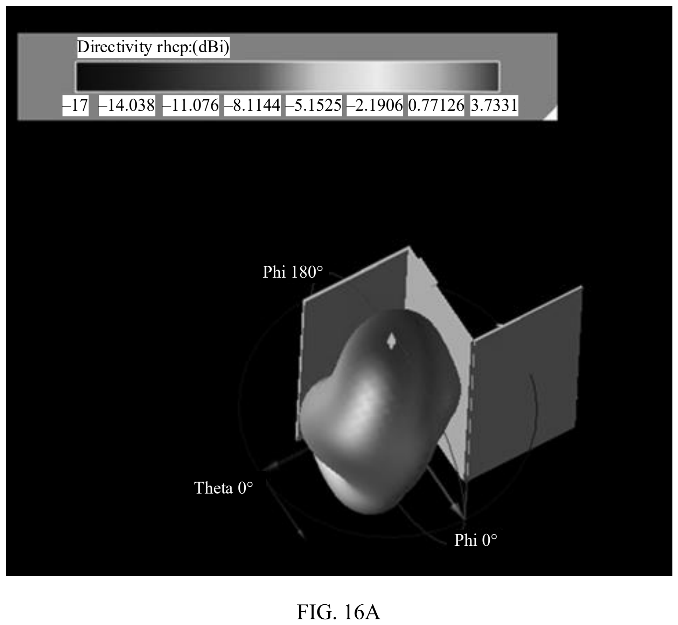

If the first radiator 311 in the electronic device 01 is located at the top of the electronic device 01, when the first radiator 311 operates at a center frequency (for example, 2.04 GHz), it can be learned from FIG. 16A (upstream pattern) that a maximum directivity factor of the first radiator 311 is about 3.73 dBi, that is, parts with a deepest color are all located in an upper hemispherical part. This may indicate that, when the user holds the electronic device 01 bent to the reverse "S" state, and the first radiator 311 operates, the electromagnetic wave having the first circular polarization characteristic and the electromagnetic wave having the second circular polarization characteristic are superimposed at the top of the electronic device 01, so that a radiation field of the electronic device 01 becomes stronger, and the electronic device 01 obtains a relatively high directivity factor and a relatively high gain.

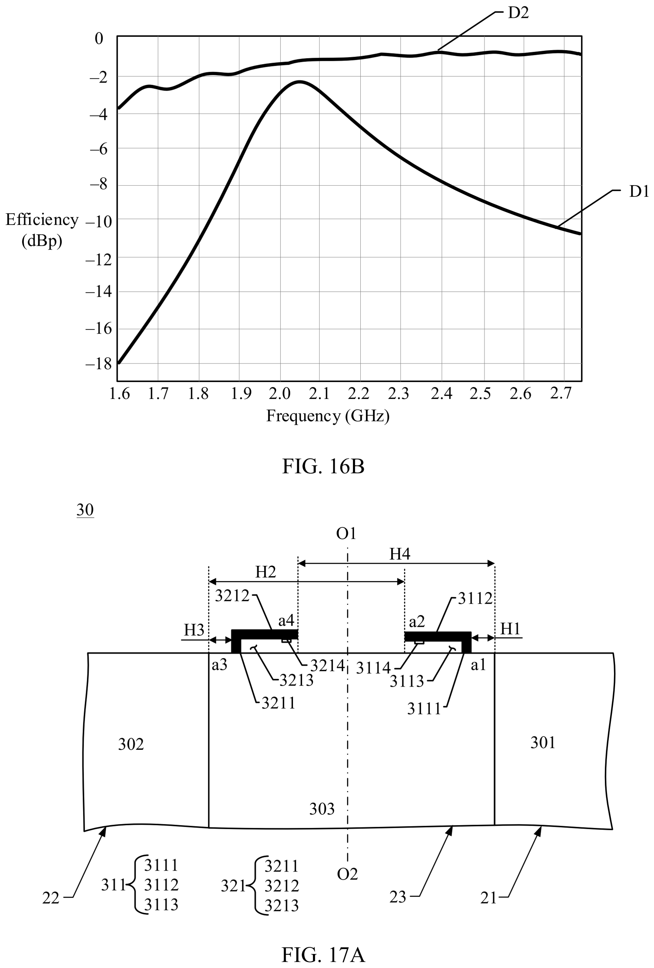

Based on this, FIG. 16B shows efficiency of the first radiator 311. A curve D1 is antenna system efficiency (close to -3.1 dBp) when the first radiator 311 operates at a center frequency of 2.04 GHz. A curve D2 is antenna radiation efficiency (-1.2 dBp) when the first radiator 311 operates at a center frequency of 2.04 GHz. Therefore, when the user holds the electronic device 01 bent to the reverse "S" state, and the first radiator 311 operates, the electronic device 01 can obtain relatively high antenna efficiency.

The foregoing provides descriptions by using an example in which the first radiator 311 is a part of the upper frame 2321 of the third housing 23 in FIG. 8, and when the electronic device 01 is bent to the standard "S" state shown in FIG. 10E, left-handed circularly polarized radiation is formed between the first housing 21 and the third housing 23 and left-handed circularly polarized radiation is formed between the second housing 22 and the third housing 23 in the electronic device 01. In some other embodiments of this application, the first radiator 311 may be a part of the lower frame 2322 of the third housing 23. In this case, when the electronic device 01 is bent to the standard "S" state shown in FIG. 10E, right-handed circularly polarized radiation may be formed between the first housing 21 and the third housing 23 and right-handed circularly polarized radiation may be formed between the second housing 22 and the third housing 23 in the electronic device 01. A process of forming the circularly polarized radiation is the same as that described above, and details are not described herein again.

The foregoing is described by using an example in which the first radiator 311 in the antenna apparatus 30 includes the first radiator 311 shown in FIG. 11A. In some other embodiments of this application, the first radiator 311 may further include a second radiator 321 shown in FIG. 17A. The second radiator 321 may include a third end a3 (ground end) and a fourth end a4 (open end). A distance H3 between the third end a3 of the second radiator 321 and the second ground plate 302 may be less than a distance H4 between the fourth end a4 of the second radiator 321 and the first ground plate 301, that is, H3<H4, so that the second radiator 321 may be disposed close to the second ground plate 302. In addition, the third end a3 of the second radiator 321 is electrically connected to the third ground plate 303 in a direct or capacitive coupling manner, and a feed end 3214 of the second radiator 321 is close to the fourth end a4 of the second radiator 321. The second radiator 321 is a quarter-wave antenna.

Similar to the first radiator 311, in some embodiments of this application, as shown in FIG. 17A, the second radiator 321 may include a third stub 3211 and a fourth stub 3212. The third stub 3211 may be disposed close to the second ground plate 302. An end that is of the third stub 3211 and that is close to the third ground plate 303 is used as the third end a3 of the second radiator 321, and is in contact with the third ground plate 303, so that the third stub 3211 can be directly electrically connected to the third ground plate 303.

In addition, the fourth stub 3212 and the third stub 3211 may be disposed in a crossed manner. For example, the fourth stub 3212 and the third stub 3211 may be disposed perpendicularly. One end of the fourth stub 3212 is connected to an upper end of the third stub 3211. The other end of the fourth stub 3212 is used as the fourth end a4 of the second radiator 321, and extends toward the first ground plate 301. In addition, there may be a second opening 3213 between the fourth stub 3212 and the third ground plate 303. A part that is of the fourth stub 3212 and that is away from the third stub 3211 may be used as the feed end 3214 of the second radiator 321. The feed end 3214 of the second radiator 321 may be electrically connected to a PCB in the electronic device 01, to feed the second radiator 321 through the PCB, so that the second radiator 321 is in an operating state.

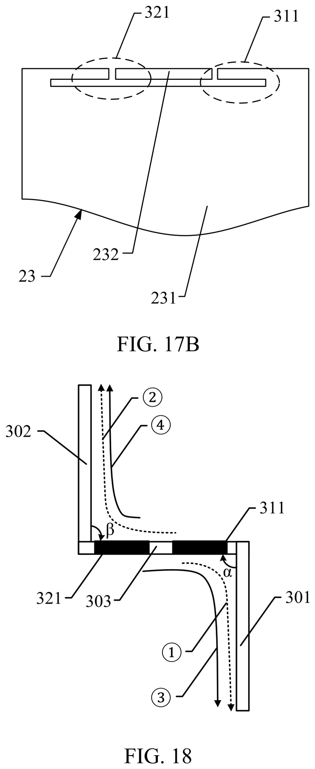

Similarly, a part of a third frame 232 in the third housing 23 shown in FIG. 17B may be used as the first radiator 311 and the second radiator 321, and the first radiator 311 and the second radiator 321 may be formed through slotting on the third housing 23.

In this way, it can be similarly learned that when the electronic device 01 is bent to the standard or reverse "S" state, and the second radiator 321 operates, a circular polarization characteristic of the radiation of the current distributed on the second ground plate 302 and the third ground plate 303 is the same as a circular polarization characteristic of the radiation of the current distributed on the first ground plate 301 and the third ground plate 303, so that energy of the two radiations having the circular polarization characteristics can be superimposed in a far field.

Based on this, the first radiator 311 and the second radiator 321 are separately fed, and a difference between a phase of feeding a current into the first radiator 311 and a phase of feeding a current into the second radiator 321 may be 180°. For example, different power supplies with a phase difference of 180° may be respectively used to feed the first radiator 311 and the second radiator 321. Alternatively, for another example, a same power supply is used. The power supply may directly feed one of the first radiator 311 and the second radiator 321, and feed the other radiator through phase shift of a phase shifter.

Based on this, because a phase difference between the currents on the first radiator 311 and the second radiator 321 is 180°, the currents that are respectively coupled to the third ground plate 303 by the first radiator 311 and the second radiator 321 can be prevented from mutual cancellation. Therefore, when the electronic device 01 is bent to the standard "S" state shown in FIG. 18, a first current ① from the first radiator 311 and a third current ③ from the second radiator 321 are distributed on the first ground plate 301 and the third ground plate 303. A second current ② from the first radiator 311 and a fourth current ④ from the second radiator 321 are distributed on the second ground plate 302 and the third ground plate 303. All the foregoing currents have a "left-handed screw" characteristic. Therefore, when the electronic device 01 is bent to the standard "S" state, and both the first radiator 311 and the second radiator 321 operate, circular polarization characteristics of radiation of the foregoing four currents are all left-handed, and energy of the radiation of the four currents is superimposed in a far field, so as to improve an antenna gain of the electronic device 01.

Based on this, to improve a radiation superimposition degree of the first current ①, the second current ②, the third current ③, and the fourth current ④ shown in FIG. 18, as shown in FIG. 17A, the first radiator 311 and the second radiator 321 may be disposed in a symmetric structure with respect to a center (a center line 01-02) of the third ground plate 303. In this case, a length of the second stub 3112 of the first radiator 311 may be the same as a length of the fourth stub 3212 of the second radiator 321, H1=H3, H2=H4, and positions of the ground end and the feed end of the first radiator 311 are symmetrically disposed with positions of the ground end and the feed end of the second radiator 321. In this way, in FIG. 18, magnitudes of the first current ① and the fourth current ④ may be approximately equal, and magnitudes of the second current ② and the third current ③ may be approximately equal, so that radiation of the foregoing four currents is superimposed to a higher degree. In this case, a first wavelength ($\lambda$1) of the first radiator 311 may be the same as a second wavelength ($\lambda$2) of the second radiator 321.

It should be noted that the center (the center line 01-02) of the third ground plate 303 means a position of a half of a distance between a side that is of the third ground plate 303 and that is close to the first ground plate 301 and a side that is of the third ground plate 303 and that is close to the second ground plate 302. In other words, a distance between the center (the center line O1-O2) and the side that is of the third ground plate 303 and that is close to the first ground plate 301 is the same as or approximately the same as a distance between the center (the center line 01-02) and the side that is of the third ground plate 303 and that is close to the second ground plate 302.

The foregoing is described by using an example in which when the electronic device 01 performs satellite communication and is bent to the foregoing standard or reverse "S" state, both the first radiator 311 and the second radiator 321 shown in FIG. 17A can generate circularly polarized radiation between the first housing 21 and the third housing 23 and between the third housing 23 and the second housing 22. In some other embodiments of this application, a switch that is electrically connected to at least one of the first radiator 311 and the second radiator 321 may be disposed in the electronic device 01. When the electronic device 01 does not need to perform satellite communication, a feed circuit may be switched by using the switch, to multiplex the first radiator 311 or the second radiator 321 as an antenna at another frequency.

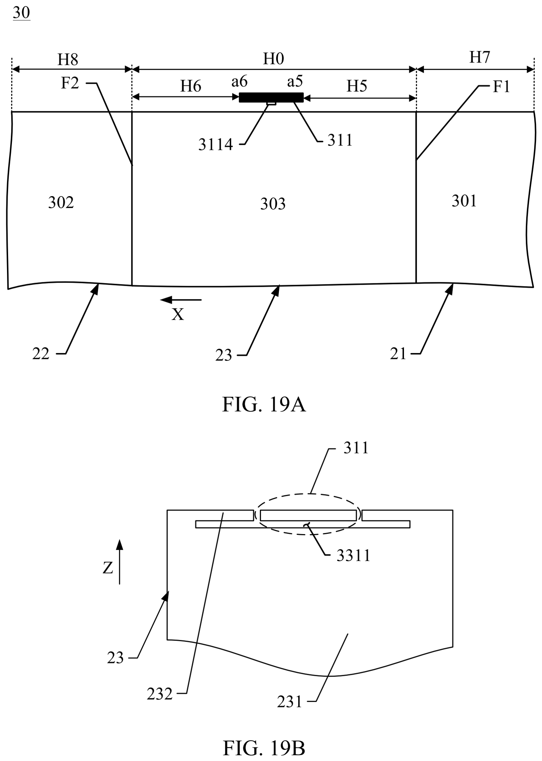

The foregoing is described by using an example in which the electronic device 01 includes at least one radiator, for example, at least one of the first radiator 311 and the second radiator 321, and the radiator is a quarter-wave antenna. In some other embodiments of this application, the electronic device 01 may include a first radiator 311 shown in FIG. 19A. The first radiator 311 is a half-wave antenna. For example, the first radiator 311 and the third ground plate 303 may be electrically connected in a separated or non-contact manner shown in FIG. 19A, for example, in a capacitive coupling manner.

Similarly, as shown in FIG. 19B, the third housing 23 may include a third support plate 231 (used as the third ground plate 303 in FIG. 19A) and a third frame 232 disposed around a periphery of the third support plate 231. A part of the third frame 232 may be used as the first radiator 311. For example, a slot may be provided on the third housing 23, to form a strip-shaped first radiator 311. There is a third opening 3311 between the first radiator 311 and the third support plate 231 (used as the third ground plate 303 in FIG. 19A). A dimension of the third opening 3311 may be less than or equal to 4 mm in a direction (Z direction) perpendicular to a length direction of the first radiator 311, so as to facilitate coupling of a current on the first radiator 311 to the third support plate 231 (used as the third ground plate 303 in FIG. 19A).

In addition, as shown in FIG. 19A, the first radiator 311 may include a fifth end a5 and a sixth end a6. There is a distance H5 between the fifth end a5 of the first radiator 311 and the first side surface F1 of the third housing 23, and there is a distance H6 between the sixth end a6 of the first radiator 311 and the second side surface F2 of the third housing 23. $H5 \leq \lambda_1/4$; and $H6 \leq \lambda_1/4$. Similarly, $\lambda_1$ is a wavelength corresponding to an operating band of the first radiator 311. In some embodiments of this application, H5=H6. In this way, a center of a vertical projection of the first radiator 311 on the third ground plate 303 may overlap a center of the third ground plate 303.

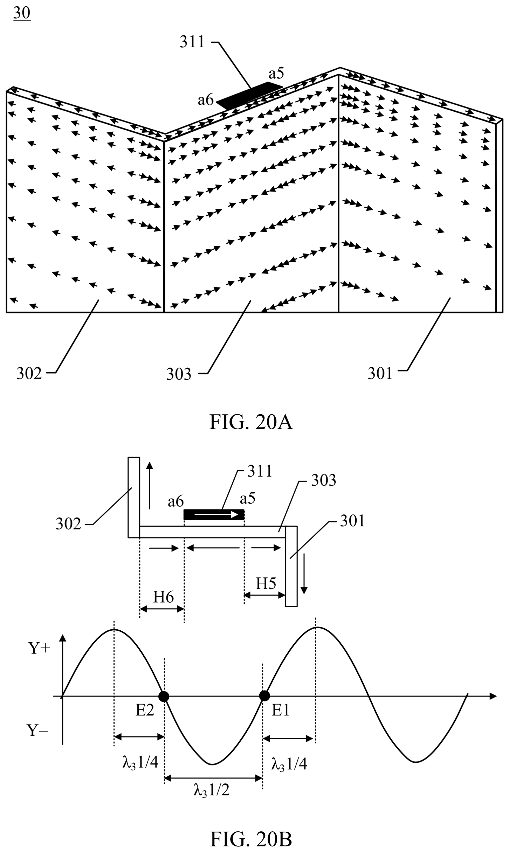

Based on this, as shown in FIG. 20A, after the first radiator 311 is fed, a current on the first radiator 311 may be coupled to the third ground plate 303. Because the first ground plate 301, the second ground plate 302, and the third ground plate 303 are electrically connected, the current is also distributed on the first ground plate 301 and the second ground plate 302. In addition, as shown in FIG. 20B, a direction of the current coupled to the third ground plate 303 is opposite to a direction of the current on the first radiator 311.

Based on this, because the first radiator 311 is a half-wave antenna, when the first radiator 311 is disposed in the middle, a current distributed in a part that is of the third ground plate 303 and that is covered by the first radiator 311 is within a range of $\lambda_1/2$, and the current is distributed on a lower half axis Y-, and for example, flows from right to left. In addition, a current distributed in a part that is of the third ground plate 303 and that is located on the right of a position corresponding to the fifth end a5 is reversed at the zero point E1, and $H5 \leq \lambda_1/4$. Therefore, after flowing rightward, the current continuously flows into the first ground plate 301. In addition, a current distributed in a part that is of the third ground plate 303 and that is located on the right of a position corresponding to the sixth end a6 is reversed at the zero point E2, and $H6 \leq \lambda_1/4$. Therefore, after flowing rightward, the current continuously flows into the first ground plate 301, and is superimposed in a far field with the foregoing current flowing into the first ground plate 301. In addition, the current on the second ground plate 302 has an upward current at an inflection point.

For example, a position of a center (geometric center) of the first radiator 311 may be used as a feed end 3311 (as shown in FIG. 19B) of the first radiator 311, and is directly fed. Alternatively, for another example, the fifth end a5 and the sixth end a6 of the first radiator 311 may be fed through capacitive coupling. A feeding manner of the first radiator 311 is not limited in this application.

For example, the operating band of the first radiator 311 may be 2 GHz to 2.2 GHz, so as to implement the foregoing satellite communication. Based on this, a range of the distance H5 may be 0 mm≤H5≤24 mm, and a dimension range of the distance H6 is 0 mm≤H6≤24 mm. A range of a length L1 of the first radiator 311 may be: 25 mm≤L1≤40 mm. In this case, the first radiator 311 may be a half-wave antenna, and when a dielectric constant of a filling medium (for example, plastic or glass fiber) in the third housing 23 is 2 to 9, the distance H5 may meet $H5 \leq \lambda_1/4$, and the distance H6 may meet $H6 \leq \lambda_1/4$.

In this way, as shown in FIG. 20B, a current distributed in a part that is of the third ground plate 303 and that is covered by the first radiator 311 is within a range of $\lambda_1/2$ (the zero point E2 to the zero point E1), and positions in the third ground plate 303 that correspond to the fifth end a5 and the sixth end a6 of the first radiator 311 are current reverse points. In this case, a current distributed in a part that is of the third ground plate 303 and that is located on the right of a position corresponding to the fifth end a5 is reversed at the zero point E1, and continuously flows into the first ground plate 301 after flowing rightward. A current distributed in a part that is of the third ground plate 303 and that is located on the right of a position corresponding to the sixth end a6 is reversed at the zero point E2, continuously flows into the first ground plate 301 after flowing rightward, and is superimposed in a far field with the foregoing current flowing into the first ground plate 301, so as to form circularly polarized radiation between the first ground plate 301 and the third ground plate 303. In addition, the part that is of the third ground plate 303 and that is covered by the first radiator 311 has a current flowing from right to left, and the current on the second ground plate 302 has an upward current at the inflection point. Therefore, circularly polarized radiation is formed between the second ground plate 302 and the third ground plate 303.

When the radiator, for example, the first radiator 311, is a half-wave antenna, a relationship between a dielectric constant of a filling medium and an actual physical size of the antenna radiator is the same as that described above, and details are not described herein again.

Based on this, when the distance H5 meets H5≤$\lambda_1$/4, and the distance H6 may meet H6≤$\lambda_1$/4, the distance H0 shown in FIG. 12B may meet $\lambda_1$/2≤H0≤3$\lambda_1$/4. In this case, when H0<$\lambda_1$/2, a width of the third ground plate 303 is too short. Consequently, current reverse cannot occur at the positions in the third ground plate 303 that correspond to the fifth end a5 and the sixth end a6 of the first radiator 311, and it is difficult to form circularly polarized radiation between the second ground plate 302 and the third ground plate 303 (or between the first ground plate 301 and the third ground plate 303). Alternatively, when H0>3$\lambda_1$/4, a width of the third ground plate 303 is too long. Consequently, there is only one current reverse point on the third ground plate 303, for example, the zero point E1 or the zero point E2, and the two current reverse points cannot occur at the same time. Therefore, it is difficult to form circularly polarized radiation between the second ground plate 302 and the third ground plate 303 (or between the first ground plate 301 and the third ground plate 303).

For example, when the range of the distance H5 may be 0 mm≤H5≤24 mm, and the dimension range of the distance H6 is 0 mm≤H6≤24 mm, a range of H0 may be 55 mm≤H0≤88 mm. In this way, the distance H0 may meet $\lambda_1$/2≤H0≤3$\lambda_1$/4.

Based on this, in a first direction X shown in FIG. 19A, the first housing 21 has a width H7, and the second housing 22 has a width H8. H0/2≤H7≤H0; and H0/2≤H8≤H0. When the first housing 21, the second housing 22, and the third housing 23 are unfolded, the first direction X is parallel to a direction from the first side surface F1 to the second side surface F2. In this case, maximum values of the width H7 of the first housing 21 and the width H8 of the second housing 22 may be equal to the width H0 of the third housing 23, and minimum values of the width H7 of the first housing 21 and the width H8 of the second housing 22 may be half of the width H0 of the third housing 23. In this way, as shown in FIG. 12B, the first ground plate 301 (the first support plate 211 of the first housing 21) may have a current flowing downward. Similarly, the second ground plate 302 (the second support plate 221 of the second housing 22) may have a current flowing upward, thereby helping form the circularly polarized radiation.

In this case, as shown in FIG. 12C, a first current ① distributed on the first ground plate 301 and the third ground plate 303 flows from the third ground plate 303 to the first ground plate 301, and has a "left-handed screw" characteristic. A second current ② distributed on the second ground plate 302 and the third ground plate 303 flows from the third ground plate 303 to the second ground plate 302, and also has a "left-handed screw" characteristic. Therefore, when the electronic device 01 is bent to the standard "S" state, and the first radiator 311 operates, the radiation of the current distributed on the first ground plate 301 and the third ground plate 303 has the first circular polarization characteristic (that is, left-handed), and the radiation of the current distributed on the third ground plate 303 and the second ground plate 302 has the second circular polarization characteristic (that is, left-handed), so that energy of the two radiations having the circular polarization characteristics can be superimposed in a far field, and the directivity factor and gain of the antenna are improved.

It can be similarly learned from the foregoing embodiments that when the electronic device 01 is bent to the "S" state shown in FIG. 20A, a range of the included angle between the first ground plate 301 and the third ground plate 303 and a range of the included angle between the second ground plate 302 and the third ground plate 303 may be between 60° and 120°.

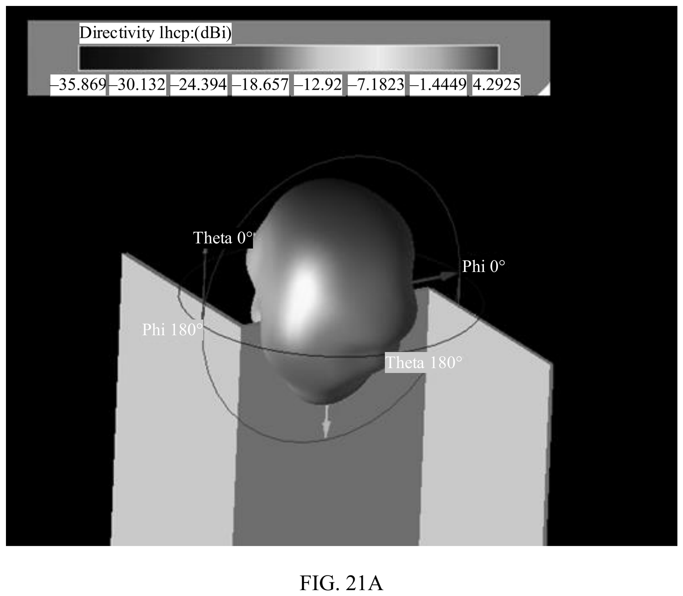

In addition, it can be learned from the foregoing description that, a flowing direction of a current on the left of the position that is on the third ground plate 303 and that corresponds to the sixth end a6 in FIG. 20B is opposite to a flowing direction of the current distributed in the part that is of the third ground plate 303 and that is covered by the first radiator 311. Therefore, if the first radiator 311 in the electronic device 01 is located at the top of the electronic device 01, when the first radiator 311 operates at a center frequency (for example, 2.02 GHz), it can be learned from FIG. 21A that there is a pit with a small region on the left side of the pattern. However, a maximum directivity factor of the first radiator 311 is about 4.2 dBi, that is, parts with a deepest color are all located in an upper hemispherical part. This may indicate that, when the user holds the electronic device 01 bent to the "S" state, the electromagnetic wave having the first circular polarization characteristic and the electromagnetic wave having the second circular polarization characteristic are superimposed at the top of the electronic device 01, so that a radiation field of the electronic device 01 becomes stronger. Even if the pit occurs in a partial region of the pattern, the electronic device 01 can still obtain a relatively high directivity factor and a relatively high gain.

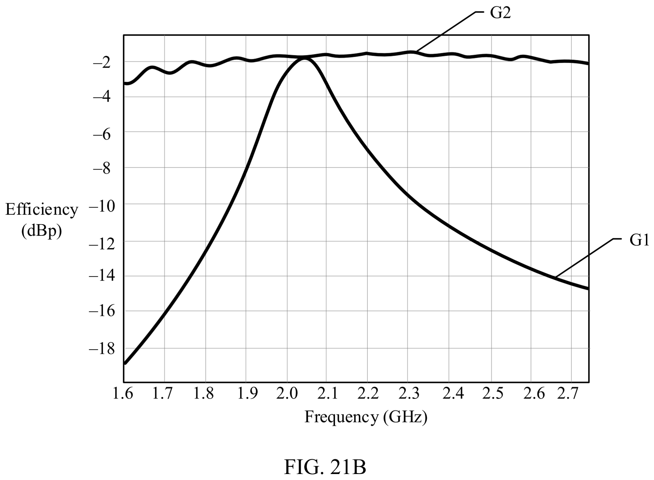

Based on this, FIG. 21B shows efficiency of the first radiator 311. A curve G1 is antenna system efficiency (close to -1.8 dBp) when the first radiator 311 operates at a center frequency of 2.04 GHz. A curve G2 is antenna radiation efficiency (-1.8 dBp) when the first radiator 311 operates at a center frequency of 2.04 GHz. Therefore, when the user holds the electronic device 01 bent to the "S" state, and the first radiator 311 operates, the electronic device 01 can obtain relatively high antenna efficiency.

It should be noted that the disposing manner of the antenna apparatus 30 in the electronic device 01 is described by using an example in which the electronic device 01 is the three-fold electronic device shown in FIG. 8, that is, the electronic device 01 includes three housings, for example, the first housing 21, the second housing 22, and the third housing 23, and the first radiator 311 in the antenna apparatus 30 is disposed on the third housing 23 located in a middle position.

In some other embodiments of this application, when the electronic device 01 is a multi-fold electronic device, that is, when the electronic device 01 includes more than three housings, for example, as shown in FIG. 3, when the electronic device 01 includes four housings (the housing S1, the housing S2, the housing S3, and the housing S4), in three housings that are sequentially arranged, a housing located in a middle position, for example, at least one of the housing S3 and the housing S2, may be used as the third housing 23 for disposing the first radiator 311.

The foregoing is merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

**Claims**

1. An electronic device (01), comprising:

   a first housing (21);
   a second housing (22);
   a third housing (23), wherein the third housing (23) is located between the first housing (21) and the second housing (22), and is rotatably connected to the first housing (21) and the second housing (22); and
   a first radiator (311), disposed in the third housing (23), wherein
   the electronic device (01) is configured to: in response to a first operation of a user, detect that an included angle between the first housing (21) and the third housing (23) is a first target angle $\alpha$, and an included angle between the second housing (22) and the third housing (23) is a second target angle $\beta$, wherein the first housing (21) and the second housing (22) are respectively located on two opposite sides of the third housing (23), and the first housing (21), the second housing (22), and the third housing (23) are electrically connected.

2. The electronic device (01) according to claim 1, wherein the electronic device (01) is further configured, so that when the first target angle $\alpha$ is formed between the first housing (21) and the third housing (23), and the second target angle $\beta$ is formed between the second housing (22) and the third housing (23), both an axial ratio of radiation of a current distributed on the first housing (21) and the third housing (23) and an axial ratio of radiation of a current distributed on the second housing (22) and the third housing (23) are less than or equal to 3 dB.

3. The electronic device (01) according to claim 2, wherein the electronic device (01) is further configured, so that when the first target angle $\alpha$ is formed between the first housing (21) and the third housing (23), and the second target angle $\beta$ is formed between the second housing (22) and the third housing (23), the radiation of the current distributed on the first housing (21) and the third housing (23) has a first circular polarization characteristic, and the radiation of the current distributed on the second housing (22) and the third housing (23) has a second circular polarization characteristic; and the first circular polarization characteristic is the same as the second circular polarization characteristic.

4. The electronic device (01) according to any one of claims 1 to 3, wherein
   an antenna gain of the electronic device (01) when the first target angle $\alpha$ is formed between the first housing (21) and the third housing (23) and the second target angle $\beta$ is formed between the second housing (22) and the third housing (23) is greater than an antenna gain of the electronic device (01) when the first housing (21), the second housing (22), and the third housing (23) are unfolded.

5. The electronic device (01) according to any one of claims 1 to 4, wherein

   the third housing (23) has a first side surface and a second side surface that are disposed opposite to each other, the first side surface is close to the first housing (21), and the second side surface is close to the second housing (22); and
   the first radiator (311) comprises a ground end and an open end, the ground end of the first radiator (311) is close to the first side surface and has a distance H1 from the first side surface, and the open end of the first radiator (311) is close to the second side surface and has a distance H2 from the second side surface, wherein
   H1$\leq\lambda_1$/4, $\lambda_1$/4$\leq$H2$\leq\lambda_1$/2, $\lambda_1$ is a wavelength corresponding to an operating band of the first radiator (311), and the first radiator (311) is a quarter-wave antenna.

6. The electronic device (01) according to claim 5, wherein

   the operating band of the first radiator (311) is 2 GHz to 2.2 GHz;
   a range of H1 is: 0 mm$\leq$H1$\leq$10 mm;

a range of H2 is: 30 mm≤H2; and
a range of a length L1 of the first radiator (311) is: 8 mm≤L1≤30 mm.

7. The electronic device (01) according to claim 5 or 6, wherein there is a distance HO between the first side surface and the second side surface, wherein $\lambda_1/2 \leq H0 \leq 3\lambda_1/4$.

8. The electronic device (01) according to claim 7, wherein

   the range of H1 is: 0 mm≤H1≤10 mm, and the range of H2 is: 30 mm≤H2; and
   a range of H0 is: 55 mm≤H0≤80 mm.

9. The electronic device (01) according to claim 8, wherein

   in a first direction, the first housing (21) has a width H7, and the second housing (22) has a width H8; H0/2≤H7≤H0, and H0/2≤H8≤H0; and
   when the first housing (21), the second housing (22), and the third housing (23) are unfolded, the first direction is parallel to a direction from the first side surface to the second side surface.

10. The electronic device (01) according to any one of claims 1 to 9, wherein the third housing (23) comprises:

    a third support plate (231), wherein the ground end of the first radiator (311) is electrically connected to the third support plate (231); and
    a third frame (232), disposed around a periphery of the third support plate (231), wherein a part of the third frame (232) is used as the first radiator (311).

11. The electronic device (01) according to claim 10, wherein the first radiator (311) comprises:

    a first stub (3111), disposed close to the first housing (21), wherein one end of the first stub is used as the ground end of the first radiator (311) and is connected to the third support plate (231); and
    a second stub (3112), disposed in a crossed manner with the first stub (3111), wherein one end of the second stub (3112) is connected to the other end of the first stub (3111), and the other end of the second stub (3112) is used as the open end of the first radiator (311) and extends toward the second housing (22), wherein
    there is a first opening between the second stub (3112) and the third support plate (231).

12. The electronic device (01) according to claim 11, wherein a length of the first stub (3111) is less than a length of the second stub (3112).

13. The electronic device (01) according to claim 11, wherein in a length direction of the first stub (3111), a dimension of the first opening is less than or equal to 4 mm.

14. The electronic device (01) according to any one of claims 1 to 13, wherein the electronic device (01) further comprises:

    a second radiator (321), disposed in the third housing (23), and located on a same side of the third housing (23) as the first radiator (311), wherein
    the first radiator (311) and the second radiator (321) are disposed in a symmetric structure with respect to a center of the third ground plate (302).

15. The electronic device (01) according to any one of claims 1 to 14, wherein
    the electronic device is further configured to: before responding to the first operation of the user, display indication information in response to a second operation of the user, wherein the indication information indicates the user to bend the first housing (21) and the third housing (23) to form the first target angle α, and bend the second housing (22) and the third housing (23) to form the second target angle β, and the first housing (21) and the second housing (22) are respectively located on two opposite sides of the third housing (23).

16. The electronic device (01) according to any one of claims 1 to 4, wherein

    the third housing (23) has a first side surface and a second side surface that are disposed opposite to each other, the first side surface is close to the first housing (21), and the second side surface is close to the second housing (22); and

one end of the first radiator (311) is close to the first side surface and has a distance H5 from the first side surface, and the other end of the first radiator (311) is close to the second side surface and has a distance H6 from the second side surface, wherein

H5$\leq\lambda_1$/4, H6$\leq\lambda_1$/4, $\lambda_1$ is a wavelength corresponding to an operating band of the first radiator (311), and the first radiator (311) is a half-wave antenna.

17. The electronic device (01) according to claim 16, wherein

the operating band of the first radiator (311) is 2 GHz to 2.2 GHz;
a range of H5 is: 0 mm$\leq$H5$\leq$24 mm;
a range of H6 is: 0 mm$\leq$H6$\leq$24 mm; and
a range of a length L1 of the first radiator (311) is: 25 mm$\leq$L1$\leq$40 mm.

18. The electronic device (01) according to claim 16 or 17, wherein there is a distance HO between the first side surface and the second side surface, wherein $\lambda_1$/2$\leq$H0$\leq$3$\lambda_1$/4.

19. The electronic device (01) according to any one of claims 16 to 18, wherein H5=H6.

20. The electronic device (01) according to any one of claims 16 to 19, wherein the third housing (23) comprises:

a third support plate (231); and
a third frame (232), disposed around a periphery of the third support plate (231), wherein a part of the third frame (232) is used as the first radiator (311);
the first radiator (311) is strip-shaped, and there is a third opening between the first radiator (311) and the third support plate (231); and
in a direction perpendicular to a length direction of the first radiator (311), a dimension of the third opening is less than or equal to 4 mm.

FIG. 1

FIG. 2A

FIG. 2B

01

Dp1  Dp2  Dp3  Dp4

10

S1  S2  S3  S4

FIG. 3

01

10

22  23  21

11

FIG. 4

FIG. 5A

01

11

10

102 103 101

22 23 21

FIG. 5B

100

120 — Sending path

30 — Antenna apparatus

110 — Receiving path

FIG. 6

FIG. 7

FIG. 8

FIG. 9A

A

301

303

α

310

β

302

X⁺

Y

X⁻

FIG. 9B

01

China Mobile ☀

4G 20:02 🔋

Settings

Bluetooth

Satellite communication

40

FIG. 10A

01

China Mobile ✳

4G 20:02 🔋

Settings

Bluetooth ⬤▬

Satellite communication ⬤▬ ——40

⚠ Do you want to enable the satellite communication function

Ⓨ Ⓝ

——41

FIG. 10B

01

China Mobile 🌣                                          4G 20:02 🔋

← Satellite communication

Satellite co

Folding angle adjustment
Bend the electronic device to the target form (Tips:
Follow the instructions to bend some housings of the
electronic device, so that the white image and the gray
image overlap; the electronic device is bent to the
target form after you feel vibration)

— 40

— 42

Rotate part ②      ② ③ ①      Rotate part ①

FIG. 10C

01

China Mobile ... 4G 20:02 🔋

← Satellit...

Satellite c...

Folding an...

**Folding angle adjustment**
Bend the electronic device to the target form (Tips: Follow the instructions to bend some housings of the electronic device, so that the white image and the gray image overlap; the electronic device is bent to the target form after you feel vibration)

| $\gamma1$ | ← ▬▬▬ → | + | 60° | − |
| $\gamma2$ | ← ▬▬▬ → | + | 90° | − |

— 42

Rotate part ②    ② ③ ①    Rotate part ①

$\gamma2$    $\gamma1$

FIG. 10D

FIG. 10E

FIG. 11A

FIG. 11B

FIG. 12A

FIG. 12B

FIG. 12C

FIG. 13A

FIG. 13B

FIG. 14A

FIG. 14B

FIG. 15

FIG. 16A

FIG. 16B

FIG. 17A

FIG. 17B

FIG. 18

30

H8       H0       H7

F2     H6    a6    a5    H5     F1

3114     311

302       303       301

X

22       23       21

FIG. 19A

311

3311

Z

23

232     231

FIG. 19B

FIG. 20A

FIG. 20B

FIG. 21A

FIG. 21B

## INTERNATIONAL SEARCH REPORT

| International application No. |
| --- |
| **PCT/CN2024/073102** |

| A. | CLASSIFICATION OF SUBJECT MATTER |
| --- | --- |

H01Q1/24(2006.01)i; H04M1/02(2006.01)i

According to International Patent Classification (IPC) or to both national classification and IPC

| B. | FIELDS SEARCHED |
| --- | --- |

Minimum documentation searched (classification system followed by classification symbols)

IPC:H01Q H04M

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 第三, 显示, 壳体, 屏, 板, 折叠, 弯折, 天线, 辐射, 增益, 信号强度, 角度, 测量, third, display, shell, screen, plate, foldable, antenna, radiate, gain, signal strength, angle, measur

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 102150126 A (QUALCOMM INC.) 10 August 2011 (2011-08-10) <br> description, paragraphs [0006]-[0109], and figures 1-8 | 1-20 |
| Y | US 2012139815 A1 (AONO TATSUHITO et al.) 07 June 2012 (2012-06-07) <br> description, paragraphs [0254]-[0289], and figures 44-50 | 1-20 |
| Y | CN 112311920 A (VIVO MOBILE COMMUNICATION CO., LTD.) 02 February 2021 (2021-02-02) <br> description, paragraphs [0004]-[0120], and figures 1-10 | 1-20 |
| A | CN 209860147 U (GUANGDONG OPPO MOBILE TELECOMMUNICATIONS CORP., LTD.) 27 December 2019 (2019-12-27) <br> entire document | 1-20 |
| A | KR 20130022177 A (AGENCY FOR DEFENSE DEVELOPMENT) 06 March 2013 (2013-03-06) <br> entire document | 1-20 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 April 2024** | **08 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073102**

| Patent document cited in search report | | | Publication date (day/month/year) | Patent family member(s) | | | Publication date (day/month/year) |
|---|---|---|---|---|---|---|---|
| CN | 102150126 | A | 10 August 2011 | WO | 2010028406 | A1 | 11 March 2010 |
| | | | | WO | 2010028406 | A8 | 14 October 2010 |
| | | | | CA | 2734528 | A1 | 11 March 2010 |
| | | | | CA | 2734528 | C | 21 July 2015 |
| | | | | TW | 201033891 | A | 16 September 2010 |
| | | | | TWI | 412992 | B | 21 October 2013 |
| | | | | BRPI | 0918179 | A2 | 01 December 2015 |
| | | | | US | 2010066643 | A1 | 18 March 2010 |
| | | | | US | 8947320 | B2 | 03 February 2015 |
| | | | | EP | 2332038 | A1 | 15 June 2011 |
| | | | | RU | 2011113535 | A | 20 October 2012 |
| | | | | RU | 2472208 | C2 | 10 January 2013 |
| US | 2012139815 | A1 | 07 June 2012 | US | 8928552 | B2 | 06 January 2015 |
| CN | 112311920 | A | 02 February 2021 | CN | 112311920 | B | 14 December 2021 |
| CN | 209860147 | U | 27 December 2019 | | None | | |
| KR | 20130022177 | A | 06 March 2013 | KR | 101255659 | B1 | 17 April 2013 |

Form PCT/ISA/210 (patent family annex) (July 2022)

**EP 4 651 300 A1**

**Patent documents cited in the description**

- CN 202310382625